# EUROPEAN PATENT SPECIFICATION

(11) **EP 4 679 664 B1**
(45) Date of publication and mention of the grant of the patent: **09.09.2026**
(21) Application number: 24767185.2
(22) Date of filing: 06.03.2024
(51) Int. Cl.: G06Q 90/00

(54) **METHOD OF DETERMINING RECYCLABILITY OF ELECTRODE OF SECONDARY BATTERY, PROGRAM FOR DETERMINING RECYCLABILITY OF ELECTRODE OF SECONDARY BATTERY, AND APPARATUS FOR DETERMINING RECYCLABILITY OF ELECTRODE OF SECONDARY BATTERY**
VERFAHREN ZUR BESTIMMUNG DER RECYCLINGFÄHIGKEIT DER ELEKTRODE EINER SEKUNDÄRBATTERIE, PROGRAMM ZUR BESTIMMUNG DER RECYCLINGFÄHIGKEIT DER ELEKTRODE EINER SEKUNDÄRBATTERIE UND VORRICHTUNG ZUR BESTIMMUNG DER RECYCLINGFÄHIGKEIT DER ELEKTRODE EINER SEKUNDÄRBATTERIE
PROCÉDÉ DE DÉTERMINATION DE LA RECYCLABILITÉ DE L'ÉLECTRODE D'UNE BATTERIE SECONDAIRE, PROGRAMME DE DÉTERMINATION DE LA RECYCLABILITÉ DE L'ÉLECTRODE D'UNE BATTERIE SECONDAIRE ET APPAREIL DE DÉTERMINATION DE LA RECYCLABILITÉ DE L'ÉLECTRODE D'UNE BATTERIE SECONDAIRE

(30) Priority: 08.03.2023 JP 2023035639
(43) Date of publication of application: 14.01.2026
(73) Proprietor: Maxell, Ltd., Kyoto 618-8525 (JP)
(72) Inventor: KISHIMI, Yuko, Otokuni-gun, Kyoto 618-8525 (JP); MATSUMOTO, Nobuaki, Otokuni-gun, Kyoto 618-8525 (JP)
(74) Representative: Mewburn Ellis LLP
(86) International application number: PCT/JP2024/008583
(87) International publication number: WO 2024/185818

(56) References cited:
- EP-A2- 1 786 057
- WO-A1-2015/029153
- JP-A- 2008 241 246
- JP-A- 2013 044 598
- JP-A- 2014 202 630
- JP-A- 2017 097 997
- US-A1- 2016 131 715
- US-A1- 2022 011 370

## Description

### Technical Field

The present invention relates to a method of determining the recyclability of an electrode of a secondary battery, a program for determining the recyclability of an electrode of a secondary battery, and an apparatus for determining the recyclability of an electrode of a secondary battery.

### Background Art

Primarily under the initiative of the European Union, laws and regulations concerning the recycling of secondary batteries such as lithium-ion batteries are being developed. Specifically, laws and regulations are being developed to require that specified percentages or more of the materials used in secondary batteries be reused in secondary batteries.

As used herein, the term "recycling" of a secondary battery is used to refer to a concept that encompasses all of the following: (a) disassembling a secondary battery and recovering a reusable part; (b) performing a predetermined treatment on a part obtained by disassembling a secondary battery to make it reusable; and (c) recovering a material (e.g., valuable metal) from a part of a secondary battery. The concept of a "recycling" of a secondary battery as used herein is different from that of "reuse" of a secondary battery (i.e., reuse of a secondary battery itself rather than a part of material thereof). Generally, secondary batteries determined to be unsuitable for reuse are recycled.

JP 2010-34021 A describes a method of recovering oxide-containing battery materials from a waste battery. This recovery method includes: recovering a substrate having oxide-containing battery materials adhering thereto; immersing it in a solvent that essentially does not allow oxides to dissolve and thus peeling the battery materials from the substrate; and separating the peeled battery materials from the substrate. The solvents listed in this publication include N-methyl-2-pyrrolidone, water, dimethyl carbonate, diethyl carbonate, and chloroform. This publication also teaches that the recovered oxides are baked at a temperature not lower than 600 °C and not higher than 1100 °C.

Japanese Patent No. 5141970 describes a method of recovering a positive electrode active material from the positive electrode of a lithium battery. A lithium battery that this recovering method may be applied to includes a positive electrode active material layer of a material containing a positive electrode active material, conductive agent and binding agent dispersed in a water-based solvent, the material being applied to the surface of the positive electrode current collector. This recovering method includes: immersing the positive electrode in an alkali aqueous solution and thus peeling the positive electrode active material layer from the positive electrode current collector; adding an organic solvent to the peeled positive electrode active material layer and thus extracting the binding agent from the peeled material; and separating, from the remaining material after the extracting step, a supernatant containing the conductive agent and a sediment containing the positive electrode active material.

JP 2017-97997 A describes a characteristic analysis method for a secondary battery in which a model equation, parameters of which are characteristic values of members constituting the battery, is used, and the characteristic values of the member are estimated by fitting a voltage value of the battery represented by the model equation with actual measurement data. In this characteristic analysis method, the actual measurement data used is obtained by applying a charge/discharge pattern to the battery under analysis, which includes an operation period consisting of either a constant current discharge period or a constant current charge period, followed by a rest period.

EP 1 786 057 A2 discloses a secondary battery module including a battery information storage module that stores electrical characteristic information and usage history information of a secondary battery.

### Citation List

### Patent Literature

Patent Document 1: JP 2010-34021 A
Patent Document 2: Japanese Patent No. 5141970
Patent Document 3: JP 2017-97997 A
EP 1 786 057 A2

### Summary of Invention

### Technical Problem

Generally, there are three types of recycling of an electrode of a secondary battery;
(1) Horizontal recycling: A secondary battery is disassembled, the electrode mixture is washed, and is reused as an electrode without any further treatment.
(2) Wet recycling: A secondary battery is disassembled, the active material is recovered from the electrode mixture, a regeneration treatment is performed as necessary, where lithium and/or other substances are added, and the resulting active material is reused.
(3) Dry recycling: A secondary battery is disassembled or combusted, the materials are refined and recovered as metal materials.

Of these types, dry recycling is the costliest type; as such, horizontal or wet recycling is preferred wherever possible. Whether horizontal or wet recycling is possible depends on the degree of deterioration of the electrode. In view of this, the degree of deterioration of each individual electrode may be evaluated and different recycling types may be used depending on the degree of deterioration.

An object of the present invention is to provide a method of determining the recyclability of an electrode of a secondary battery that allows determining the degree of deterioration of an electrode to be recycled, and to provide such a program for determining the recyclability of an electrode of a secondary battery and such an apparatus for determining the recyclability of an electrode of a secondary battery.

### Solution to Problem

A method of determining recyclability of an electrode of a secondary battery according to an embodiment of the present invention is a method of determining recyclability of an electrode of a secondary battery by determining a degree of deterioration of an electrode included in a secondary battery subject to determination, including: a threshold value estimation step in which a threshold value Dth of electrolyte diffusion coefficient of the secondary battery subject to determination is estimated using a learned model and based on input data, the input data being data including some of characteristic parameters of the secondary battery subject to determination; and a classification step in which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on a difference between the threshold value Dth and the threshold value Dth0, ΔDth = Dth - Dth0. The learned model is generated with respect to a plurality of secondary batteries for learning by performing: for each of the plurality of secondary batteries for learning, determining characteristic parameters of the secondary battery for learning; based on a predetermined model equation and the characteristic parameters of the secondary battery for learning, obtaining a discharge capacity found when an electrolyte diffusion coefficient of the secondary battery for learning has been changed and obtaining a relationship between the electrolyte diffusion coefficient and the discharge capacity of the secondary battery for learning; based on the relationship between the electrolyte diffusion coefficient and the discharge capacity of the secondary battery for learning, determining a threshold value of electrolyte diffusion coefficient of the secondary battery for learning; and running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

A program for determining recyclability of an electrode of a secondary battery according to an embodiment of the present invention is a program for determining recyclability of an electrode of a secondary battery by determining a degree of deterioration of an electrode included in a secondary battery subject to determination, the program being configured to cause a computer to perform: a threshold value estimation step in which a threshold value Dth of electrolyte diffusion coefficient of the secondary battery subject to determination is estimated using a learned model and based on input data, the input data being data including some of characteristic parameters of the secondary battery subject to determination; and a classification step in which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on a difference between the threshold value Dth and the threshold value Dth0, ΔDth = Dth - Dth0. The learned model is generated with respect to a plurality of secondary batteries for learning by performing: for each of the plurality of secondary batteries for learning, determining characteristic parameters of the secondary battery for learning; based on a predetermined model equation and the characteristic parameters of the secondary battery for learning, obtaining a discharge capacity found when an electrolyte diffusion coefficient of the secondary battery for learning has been changed and obtaining a relationship between the electrolyte diffusion coefficient and the discharge capacity of the secondary battery for learning; based on the relationship between the electrolyte diffusion coefficient and the discharge capacity of the secondary battery for learning, determining a threshold value of electrolyte diffusion coefficient of the secondary battery for learning; and running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

An apparatus for determining recyclability of an electrode of a secondary battery according to an embodiment of the present invention is an apparatus for determining recyclability of an electrode of a secondary battery by determining a degree of deterioration of an electrode included in a secondary battery subject to determination, including: a threshold value estimation device with which a threshold value Dth of electrolyte diffusion coefficient of the secondary battery subject to determination is estimated using a learned model and based on input data, the input data being data including some of characteristic parameters of the secondary battery subject to determination; and a classification device with which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on a difference between the threshold value Dth and the threshold value Dth0, ΔDth = Dth - Dth0. The learned model is generated with respect to a plurality of secondary batteries for learning by performing: for each of the plurality of secondary batteries for learning, determining characteristic parameters of the secondary battery for learning; based on a predetermined model equation and the characteristic parameters of the secondary battery for learning, obtaining a discharge capacity found when an electrolyte diffusion coefficient of the secondary battery for learning has been changed and obtaining a relationship between the electrolyte diffusion coefficient and the discharge capacity of the secondary battery for learning; based on the relationship between the electrolyte diffusion coefficient and the discharge capacity of the secondary battery for learning, determining a threshold value of electrolyte diffusion coefficient of the secondary battery for learning; and running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

An apparatus for determining recyclability of an electrode of a secondary battery according to an embodiment of the present invention is an apparatus for determining recyclability of an electrode of a secondary battery by determining a degree of deterioration of an electrode included in a secondary battery subject to determination, including: a first data generation device configured to determine, for each of a plurality of secondary batteries for learning, characteristic parameters of the secondary battery for learning; a second data generation device configured to obtain, based on a predetermined model equation and the characteristic parameters of the secondary battery for learning, a discharge capacity found when an electrolyte diffusion coefficient of the secondary battery for learning has been changed, and obtain a relationship between the electrolyte diffusion coefficient and the discharge capacity of the secondary battery for learning; a third data generation device configured to determine, based on the relationship between the electrolyte diffusion coefficient and the discharge capacity of the secondary battery for learning, a threshold value of electrolyte diffusion coefficient of the secondary battery for learning; a model generation device configured to generate a learned model through machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning; a threshold value estimation device configured to estimate, using the learned model and based on input data, a threshold value Dth of electrolyte diffusion coefficient of the secondary battery subject to determination, the input data being data including some of the characteristic parameters of the secondary battery subject to determination; and a classification device configured to compare the threshold value Dth and the threshold value Dth0 of electrolyte diffusion coefficient of the secondary battery subject to determination or a secondary battery of the same type as the secondary battery subject to determination before deterioration and classify the secondary battery subject to determination based on a difference between the threshold value Dth and the threshold value Dth0, ΔDth = Dth - Dth0.

### Advantageous Effects of Invention

The present invention allows determining the degree of deterioration of an electrode to be recycled.

### Brief Description of Drawings

FIG. 1 is a flow chart of a method of diagnosing a secondary battery.
FIG. 2 is a flow chart illustrating a more specific exemplary procedure of the step of estimating characteristic parameters.
FIG. 3 is a graph illustrating an exemplary relationship between electrolyte diffusion coefficient and discharge capacity.
FIG. 4 illustrates an exemplary manner in which a threshold value Dth is determined.
FIG. 5 is a flow chart of a method of determining the recyclability of an electrode of a secondary battery according to a first embodiment of the present invention.
FIG. 6 is a flowchart illustrating an example of a method for creating teacher data.
FIG. 7 is a flow chart of a method of determining the recyclability of an electrode of a secondary battery according to a second embodiment of the present invention.
FIG. 8 illustrates an exemplary process of classifying a battery subject to determination according to the present embodiment.
FIG. 9 illustrates another exemplary process of classifying a battery subject to determination according to the present embodiment.
FIG. 10 shows the relationship between ΔD obtained by diagnosis and the number of cycles at the onset of a sharp drop.
FIG. 11 is a chart illustrating a procedure of machine learning.
FIG. 12 is a scatter diagram obtained by plotting predicted values of the threshold value of the electrolyte diffusion coefficient on the vertical axis and plotting true values (values obtained by analysis) on the horizontal axis with respect to training data.
FIG. 13 is a scatter diagram obtained by plotting predicted values of the threshold value of the electrolyte diffusion coefficient on the vertical axis and plotting true values (values obtained by analysis) on the horizontal axis with respect to validation data.
FIG. 14 is a scatter diagram obtained by plotting predicted values of the threshold value of the electrolyte diffusion coefficient on the vertical axis and plotting true values (values obtained by analysis) on the horizontal axis with respect to training data.
FIG. 15 is a scatter diagram obtained by plotting predicted values of the threshold value of the electrolyte diffusion coefficient on the vertical axis and plotting true values (values obtained by analysis) on the horizontal axis with respect to validation data.
FIG. 16 is an SEM micrograph of the positive electrodes (LCO) of Determination Examples 1 to 3 in their initial state.
FIG. 17 is an SEM micrograph of the positive electrode of Determination Example 1 after deterioration.
FIG. 18 is an SEM micrograph of the positive electrode of Determination Example 2 after deterioration.
FIG. 19 is an SEM micrograph of the positive electrode of Determination Example 3 after deterioration.
FIG. 20 is an SEM micrograph of the positive electrodes (NCM) of Determination Examples 4 and 5 in their initial state.
FIG. 21 is an SEM micrograph of the positive electrode of Determination Example 4 after deterioration.
FIG. 22 is an SEM micrograph of the positive electrode of Determination Example 5 after deterioration.
FIG. 23 is a scatter diagram obtained by plotting predicted values of the electrolyte conductivity on the vertical axis and plotting true values (values obtained by analysis) on the horizontal axis with respect to training data.
FIG. 24 is a scatter diagram obtained by plotting predicted values of the electrolyte conductivity on the vertical axis and plotting true values (values obtained by analysis) on the horizontal axis with respect to validation data.

### Description of Embodiments

### Determination of Degree of Deterioration of Electrode Using Threshold Value of Electrolyte Diffusion Coefficient

The degree of deterioration of an electrode can be mainly determined based on two points: discharge capacity per unit weight and discharge characteristics. Even when a certain discharge capacity per unit weight of an electrode has been maintained, this electrode should not be horizontally recycled if its discharge characteristics have decreased.

In the past, the present inventors developed a method of diagnosing a secondary battery focusing on electrolyte diffusion coefficient (PCT/JP2023/003516). According to this diagnostic method, the load characteristics of a secondary battery are measured and, based on the data obtained, characteristic parameters of the secondary battery being diagnosed at the time of diagnosis (e.g., electrolyte diffusion coefficient Dn and electrolyte conductivity) are estimated. Next, based on a model equation and the estimated parameters, the relationship between electrolyte diffusion coefficient and discharge capacity is determined. Based on this relationship between electrolyte diffusion coefficient and discharge capacity, the value of electrolyte diffusion coefficient at which the secondary battery becomes not suitable for reuse (i.e., threshold value), Dth, is determined. The larger the difference between the electrolyte diffusion coefficient Dn at the time of diagnosis and the threshold value Dth, ΔD = Dn - Dth, the higher the evaluated possibility that the secondary battery being diagnosed can still be used for a long time (i.e., the remaining life is long).

The present inventors turned their attention to the threshold value Dth obtained in the process of performing the above-described diagnosis method. The threshold value Dth changes depending on the rate of discharge current. Thus, the threshold value Dth may indirectly reflect discharge characteristics of the electrode to be recycled.

The above-described diagnostic method involves rounding changes in characteristic parameters other than electrolyte diffusion coefficient into changes in electrolyte diffusion coefficient to allow evaluation of the remaining life based on one parameter (i.e., electrolyte diffusion coefficient). It has been known that this approach allows evaluation of the remaining life of a secondary battery at a relatively high precision.

However, in an actual secondary battery, cycle-related deterioration causes changes in characteristic parameters other than electrolyte diffusion coefficient (e.g., electrolyte conductivity). Thus, if, after the time of diagnosis, a renewed measurement of load characteristics and other steps are performed to estimate the latest characteristic parameters and a threshold value Dth is determined in the same manner as discussed above based on these latest characteristic parameters, the threshold value Dth reflecting the latest characteristic parameters may be different from the threshold value Dth that was determined based on the characteristic parameters at the time of diagnosis.

In other words, exactly speaking, the threshold value Dth obtained in the process of performing the above-described diagnostic method varies depending on the timing of performing diagnosis. In other words, the threshold value Dth itself changes as the cycle deterioration of the secondary battery progresses.

The present inventors investigated the relationship between the manner in which an electrode of a secondary battery deteriorates and the threshold value Dth, and then discovered that a secondary battery in which the threshold value Dth is changing in an increasing trend as cycle deterioration progresses is experiencing one of the following two events: (i) a significant decrease in the porosity of the electrode mixture layer to block paths for ions within the electrolyte; and (ii) structural deterioration of the electrode.

To provide some supplemental explanation regarding event (i), an electrode mixture layer generally tends to expand during use; if few precipitates are produced by electrolyte reaction, the porosity increases over cycles. However, if a large number of precipitates are produced by the electrolyte reactant, the precipitates may clog the pores to decrease the porosity.

Nevertheless, an actual secondary battery seldom experiences a kind of deterioration with a significant decrease in porosity as cycle deterioration progresses, as in event (i). Thus, if the threshold value Dth is changing in an increasing trend as cycle deterioration progresses, it can usually be determined that event (ii) is happening, i.e., structural deterioration of the electrode.

In other words, it can be determined to be highly likely that a structural deterioration of the electrode has occurred if a comparison between a threshold value Dth0 obtained by performing the above-described diagnostic method on a secondary battery before deterioration (e.g., in its initial state) and a threshold value Dth obtained by performing the above-described disagnostic method on the secondary battery after deterioration shows that the difference ΔDth = Dth - Dth0 is larger than a predetermined value.

As used herein, "structural deterioration" of an electrode refers to situations where, for example, the active material particles in the electrode have developed cracks or a phase change has occurred due to chemical deterioration such that the ion diffusivity in the solid phase of the active material particles themselves has decreased. An electrode that has experienced structural deterioration is thought to be not only unsuitable for horizontal recycling but also for wet recycling. The regeneration treatment during wet recycling is a step where, for example, an active material with decreased lithium content due to deterioration is mixed with a lithium material and baked again to achieve recovery to initial lithium content. If the active material particles themselves have developed cracks, for example if they have broken, recovering from this through a regeneration treatment would be a difficult process.

On the other hand, if the difference ΔDth is not larger than a predetermined value, it can be determined to be highly likely that event (ii), i.e., structural deterioration, has not occurred or, even if some such deterioration has occurred, the porosity of the electrode mixture layer has increased due to mixture expansion to ensure that there are larger ion diffusion paths, thus maintaining sufficient discharge characteristics.

### Simplification Using Learned Model

To determine a threshold value Dth, a simulation must be performed for each secondary battery subject to determination to obtain the relationship between electrolyte diffusion coefficient and discharge capacity. This simulation requires a certain time and also requires one to be skilled in utilizing the software used for the simulation. In view of this, to allow one to determine recyclability in a simpler manner, it will be preferable if a threshold value Dth can be determined without such a simulation.

In connection with this point, the present inventors in the past developed a method of estimating the threshold value Dth using an estimation model generated through machine learning (PCT/JP2023/027999). Specifically, first, for a plurality of secondary batteries with, for example, different types, different use conditions and different degrees of deterioration of positive and negative electrode active materials, the above-described simulation was conducted to determine a threshold value Dth. Next, they built an estimation model (learned model) through machine learning, where some of the characteristic parameters of the secondary batteries represented the input data (explanatory variables) and the determined threshold value Dth represented the output data (target variables), and, using this model, successfully estimated the threshold value Dth for a secondary battery with an unknown threshold value Dth. During this, they discovered that precision in estimation can be further enhanced by including the discharge capacity and electrolyte conductivity of the secondary battery in the input data.

The electrolyte conductivity of a secondary battery may be obtained by performing fitting on data obtained by measuring load characteristics of this battery and on simulation results, for example. In the "secondary battery diagnostic method" discussed above, the electrolyte diffusion coefficient Dn at the time of diagnosis must be estimated and, during the simulation performed during this process, electrolyte conductivity can also be obtained.

On the other hand, the "method of determining the recyclability of an electrode of a secondary battery" only requires that the threshold value Dth of electrolyte diffusion coefficient be known, and does not require estimation of the electrolyte diffusion coefficient Dn at the time of determination. As discussed above, the threshold value Dth of electrolyte diffusion coefficient can be precisely estimated using a learned model if the discharge capacity and electrolyte conductivity of the secondary battery are known. The discharge capacity of the secondary battery at the time of determination can be obtained by relatively simple measurement. Thus, if the electrolyte conductivity of the secondary battery at the time of determination can be estimated through a method other than simulation-based analysis, a method of determining the recyclability of an electrode of a secondary battery can be performed without using any simulation-based analysis.

The present inventors determined the electrolyte conductivity of each of a plurality of secondary batteries with, for example, different types, different use conditions and different degrees of deterioration of positive and negative electrode active materials. Then, they built an estimation model (learned model) through machine learning, where those characteristic parameters of the secondary batteries that can be obtained without conducting simulation represent the input data (explanatory variables) and the the electrolyte conductivity represents the output data (target variables), and, using this model, successfully estimated the electrolyte conductivity of a secondary battery with an unknown electrolyte conductivity.

The present invention was made based on the above discoveries. Now, embodiments of the present invention will be described in detail with reference to the drawings.

### Embodiments

A method of determining the recyclability of an electrode of a secondary battery according to an embodiment of the present invention involves determining the degree of deterioration of the electrode of the secondary battery based on a "threshold value Dth of electrolyte diffusion coefficient", discussed further below, and classifying the secondary battery. First, to explain "threshold value Dth of electrolyte diffusion coefficient", a "secondary battery diagnostic method" using such a "threshold value Dth of electrolyte diffusion coefficient" will be described.

The "secondary battery diagnostic method" discussed below is different from a "method of determining the recyclability of an electrode of a secondary battery", and is a method mainly used to determine whether a secondary battery is suitable for reuse, and more specifically a method for evaluating the remaining life of a secondary battery. The present applicant has also filed a patent application for the invention of this method (PCT/JP2023/003516).

### Secondary Battery Diagnostic Method

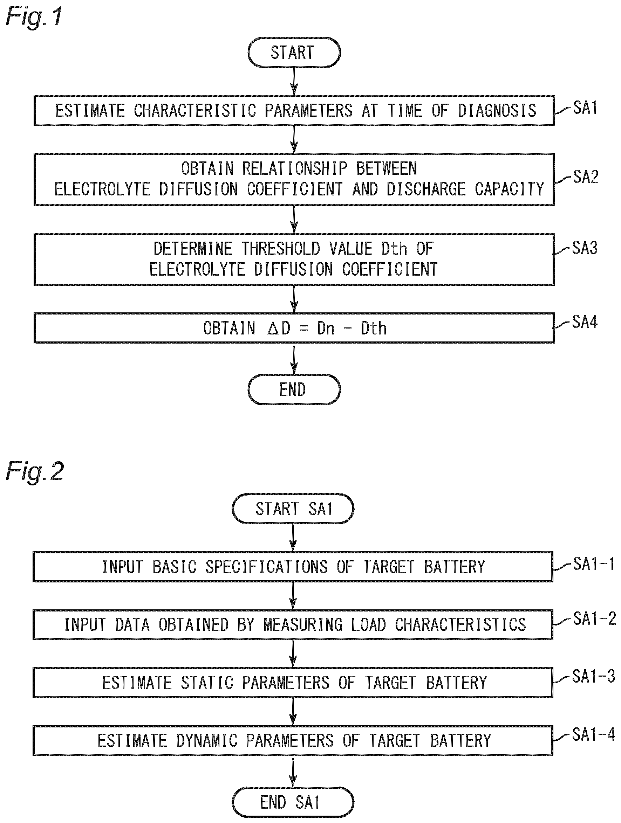

FIG. 1 is a flowchart of a secondary battery diagnostic method. This diagnostic method includes a process of estimating characteristic parameters of a secondary battery to be diagnosed (hereinafter "target battery") at a time of diagnosis (step SA1), a process of obtaining the relationship between the electrolyte diffusion coefficient and the discharge capacity (step SA2), a process of determining the threshold value Dth of the electrolyte diffusion coefficient (step SA3), and a process of obtaining the difference ΔD between the threshold value Dth and the electrolyte diffusion coefficient Dn at the time of diagnosis (step SA4). Hereinafter, each process will be described in detail.

### Process of Estimating Characteristic Parameters

Characteristic parameters of the target battery at the time of diagnosis are estimated (step SA1). More specifically, on the basis of the data obtained by measuring the load characteristics of the target battery, the characteristic parameters of the target battery at the time of diagnosis, including the electrolyte diffusion coefficient Dn of the target battery at the time of diagnosis, are estimated by using a predetermined model equation.

In this process, characteristic parameters of the target battery at the time of diagnosis are estimated by fitting the data obtained by measuring the load characteristics of the target battery by using a predetermined model equation. This analysis (simulation) can be performed by a computer program that can perform fluid analysis, and can be performed by, for example, the software Battery Design Studio available from Siemens AG.

The model equation used can be an equation well known in this field. As the model equation, for example, the equation described in Marc Doyle et al., "Modeling of Galvanostatic Charge and Discharge of the Lithium/Polymer/Insertion Cell," J. Electrochem. Soc., Vol. 140, No. 6, June (1993) can be used.

The target battery is, for example, a lithium ion battery.

The data obtained by measuring the load characteristics of the target battery is, for example, a discharge curve obtained by measuring the target battery at a plurality of discharge rates. This data preferably includes a discharge curve obtained by measurement at an extremely low discharge rate (0.02 C, for example). Further, this data preferably includes a discharge curve obtained by measurement at a discharge rate of 1 C or higher. This data preferably includes a discharge curve obtained by measurement at discharge rates of three or more levels, and more preferably includes a discharge curve obtained by measurement at discharge rates of four or more levels. The data obtained by measuring the load characteristics of the target battery may be a charge curve obtained by measuring the target battery at a plurality of charge rates.

The characteristic parameters estimated in this process (characteristic parameters of the target battery at the time of diagnosis) include at least the electrolyte diffusion coefficient Dn of the target battery at the time of diagnosis. The characteristic parameters can include, for example, a solid-phase diffusion coefficient of positive and negative electrode active materials and an electrolyte conductivity. Other specific examples of the characteristic parameters will be described below.

FIG. 2 is a flowchart illustrating an example of a more specific procedure of the process of estimating characteristic parameters (step SA1). In this example, the process of estimating the characteristic parameters (step SA1) includes a process of inputting basic specifications of the target battery (step SA1-1), a process of inputting data obtained by measuring load characteristics of the target battery (step SA1-2), a process of estimating static parameters of the target battery (step SA1-3), and a process of estimating dynamic parameters of the target battery (step SA1-4).

Basic specifications of the secondary battery to be diagnosed are input to the analysis software (step SA1-1). The basic specifications input can include, but are not limited to, for example, the following.
- Electrode compositions of positive and negative electrodes (constituent materials, content ratios, particle sizes, and the like)
- Electrode thicknesses, densities, and tortuosities (approximately 1.5 in many cases) of positive and negative electrodes
- Materials, thicknesses, and electrical conductivities of positive and negative electrode current-collecting foils
- Thickness and porosity of separator
- Composition of electrolyte (constituent materials, content ratios)
- Thermal conductivities and heat capacities of the constituent materials (basic physical property values specific to the materials)
- Electrode area

With the diagnosis being basically performed non-destructively, accurate composition information of the electrolyte at the time of diagnosis cannot be obtained. Therefore, general information of the secondary battery to be diagnosed (or specification of a new battery) is obtained and input as parameters. Although some values need to be input when the simulation is actually performed, the composition of the electrolyte does not significantly affect the result of the simulation. In the diagnostic method of the present embodiment, the role of the electrolyte composition information is only for reference purposes.

Although the densities of the positive and negative electrodes are also expected to change due to expansion from initial states, accurate values at the time of diagnosis cannot be measured. Therefore, an initial value (specification or the like) or a value predicted from the initial value is input. If the value is completely unknown, a typical value may be input. If necessary, fine adjustment may be performed in step SA1-4.

The data obtained by measuring the load characteristics of the target battery is input to the analysis software (step SA1-2). The data obtained by measuring the load characteristics of the target battery is, as described above, a discharge curve obtained by measuring the target battery at a plurality of discharge rates, or the like. The "data obtained by measuring the load characteristics of the target battery" is hereinafter also referred to as "actual measurement data".

The static parameters of the target battery are estimated from the actual measurement data and the model equation (step SA1-3). For example, the static parameters of the target battery are adjusted so as to match a shape of the discharge curve obtained by measurement at an extremely low discharge rate. The discharge curve obtained by measurement at an extremely low discharge rate (0.02 C, for example) can be considered to approximately coincide with a voltage curve when no load is connected (open-circuit voltage curve (OCV)). The static parameters can include, but are not limited to, for example, the following.
- Capacities per unit weight of positive and negative electrode active materials (battery after use decreases in discharge capacity)
- Respective utilization rates of positive and negative electrode active materials (not all regions are mutually used)
- Maximum voltage and minimum voltage of target battery usage range

The dynamic parameters of the target battery are estimated from the actual measurement data and the model equation (step SA1-4). For example, a simulation is performed in which the target battery is discharged at a current value equivalent to that of the measurement conditions of actual measurement data, and the dynamic parameters are adjusted while comparing the data obtained by this simulation result and the actual measurement data such that the two coincide. This simulation can be performed using, for example, the discharge curve prediction of Battery Design Studio described above. The dynamic parameters may include, but are not limited to, for example, the following.
- Electrolyte conductivity
- Electrolyte diffusion coefficient
- Solid phase diffusion coefficients of positive and negative electrode active materials
- Heat capacity of target battery

The ambient temperature at the time of the simulation is preferably set so as to coincide with the ambient temperature at the time of actual measurement data acquisition. In the case of a medium or larger sized product battery, particularly, a product battery assumed to be used at a high rate, preferably the influence of heat generation is taken into consideration. To achieve this, preferably measurements are performed at least at 1 C and fitting is conducted with the actual measurement data affected by heat generation. On the other hand, as long as the target battery is a small cell for a desk test or the like, the influence of heat generation need not be considered.

Through the above processes, it is possible to estimate the characteristic parameters of the target battery at the time of diagnosis, including the electrolyte diffusion coefficient Dn of the target battery at the time of diagnosis.

### Process of Obtaining Relationship between Electrolyte Diffusion Coefficient and Discharge Capacity

On the basis of the model equation used in step S1 and the characteristic parameters estimated in step SA1, the relationship between the electrolyte diffusion coefficient and the discharge capacity is obtained (step SA2). More specifically, the discharge capacity is obtained by performing a discharge simulation while changing only the electrolyte diffusion coefficient among the characteristic parameters estimated in step SA1 and keeping the other characteristic parameters constant. A discharge rate and an ambient temperature at the time of the discharge simulation are preferably set in accordance with the reuse application. For example, if the target battery is expected to be used in the application at an average rate of about 1 C, then the discharge rate used when obtaining the relationship between the electrolyte diffusion coefficient and the discharge capacity is also 1 C. Since it is difficult to precisely match all environmental conditions, simulations may be performed using average values.

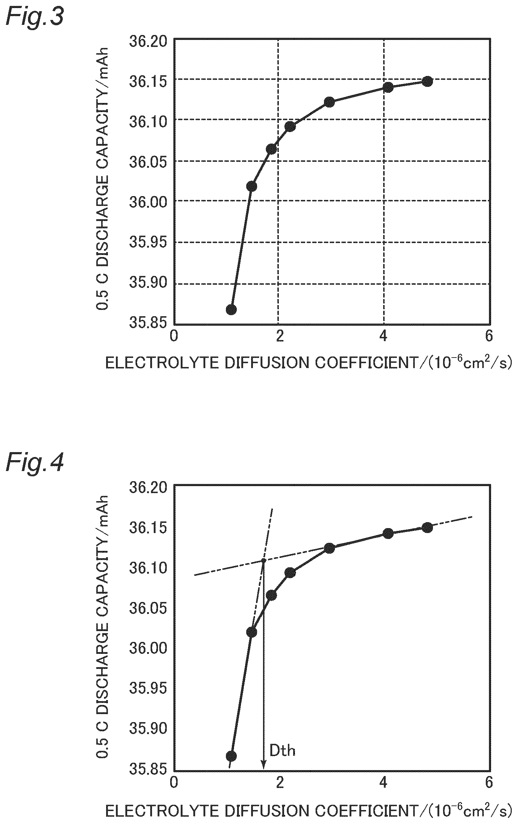

FIG. 3 is a graph showing an example of a relationship between the electrolyte diffusion coefficient and the discharge capacity. In this example, the discharge capacity with the ambient temperature set to 45°C and the discharge rate set to 0.5 C was obtained for each case in which the electrolyte diffusion coefficient was 4.8 x 10⁻⁶, 4.0 x 10⁻⁶, 2.95 x 10⁻⁶, 1.85 x 10⁻⁶, 1.48 x 10⁻⁶, and 1.1 x 10⁻⁶ cm²/s.

As shown in this example, generally, the smaller the electrolyte diffusion coefficient, the smaller the discharge capacity. Further, the relationship between the electrolyte diffusion coefficient and the discharge capacity is not linear, but rather has a tendency to exhibit a curve such that the decrease in discharge capacity increases as the electrolyte diffusion coefficient decreases.

### Process of Determining Threshold Value Dth of Electrolyte Diffusion Coefficient

On the basis of the relationship between the electrolyte diffusion coefficient and the discharge capacity obtained in step SA2, the threshold value Dth of the electrolyte diffusion coefficient is determined (step SA3). More specifically, with reference to the relationship between the electrolyte diffusion coefficient and the discharge capacity obtained in step SA2, the value of the electrolyte diffusion coefficient when the target battery becomes unsuitable for reuse is determined to be the threshold value Dth. A criterion for determining that the target battery is "not suitable for reuse" differs according to the intended reuse application of the target battery. Therefore, the criterion for determining that the target battery is "not suitable for reuse" is set in accordance with the application.

For example, when the discharge capacity becomes equal to or less than a predetermined permissible value, the determination may be made that the battery is not suitable for reuse. In this case, the electrolyte diffusion coefficient when the discharge capacity becomes equal to or less than the predetermined permissible value is determined to be the threshold value Dth. For example, in the example of FIG. 3, in a case in which the permissible value of the discharge capacity is 36.02 mAh, the threshold value Dth is 1.40 x 10⁻⁶ cm²/s.

Alternatively, at the onset of a sharp drop in discharge capacity, the determination may be made that the battery is not suitable for reuse. In this case, the electrolyte diffusion coefficient at the onset of a sharp drop in discharge capacity is determined to be the threshold value Dth. For example, the electrolyte diffusion coefficient when a slope of the discharge capacity is equal to or greater than a predetermined magnitude may be set as the threshold value Dth. Further, as shown in FIG. 4, a point at which tangents of each curve before and after the onset of a sharp drop in discharge capacity intersect may be set as the threshold value Dth.

### Process of Obtaining Difference ΔD between Threshold Value Dth and Electrolyte Diffusion Coefficient Dn at Time of Diagnosis

A difference ΔD between the threshold value Dth determined in step SA3 and the electrolyte diffusion coefficient Dn at the time of diagnosis estimated in step SA1 is obtained (step SA4). For example, if Dn = 2.22 x 10⁻⁶ cm²/s and Dth = 1.40 x 10⁻⁶ cm²/s, then ΔD = Dn - Dth = 0.82 x 10⁻⁶ cm²/s.

This ΔD can be used as an index for the remaining life of the target battery. That is, the target battery can be evaluated as follows: the larger the value of ΔD, the higher the likelihood the target battery can be used for a long period of time, and the smaller the value of ΔD, the lower the likelihood the target battery can be used for a long period of time. Even if the discharge capacities at the time of diagnosis are about the same, ΔD may be different. By using ΔD, it is possible to more accurately evaluate the remaining life of the target battery as compared with known methods in which the remaining life is evaluated on the basis of the magnitude of the discharge capacity at the time of diagnosis.

### Method of Determining Recyclability of Electrode of Secondary Battery

A "secondary battery diagnostic method" using a "threshold value Dth of electrolyte diffusion coefficient" has been described. Now, a "method of determining the recyclability of an electrode of a secondary battery" using such a "threshold value Dth of electrolyte diffusion coefficient" will be described.

A method of determining the recyclability of an electrode of a secondary battery according to an embodiment of the present invention is a method of determining the degree of deterioration of an electrode included in a secondary battery for which determination is to be made (hereinafter referred to as "battery subject to determination"). For example, the recyclability determination method according to the present embodiment involves evaluating the degree of deterioration of an electrode of a battery subject to determination and classifying the battery subject to determination as one of a plurality of classifications (e.g., "horizontally recyclable", "wet-recyclable" or "not suitable for horizontal recycling nor wet recycling").

A battery subject to determination may be a lithium-ion battery, for example. Although not limiting, an electrode of a battery subject to determination may include, for example, a current collector (typically a metal foil) and an electrode mixture layer formed on the current collector. The electrode mixture layer may include, for example, an electrode active material, conductive aid, and a binder. The electrode subject to determination is preferably a positive electrode.

Although not limiting, the battery subject to determination may be, for example, a secondary battery that has been charged and discharged repeatedly and thus decreased its discharge capacity so as to become unsuitable for reuse, and has been collected.

### First Embodiment

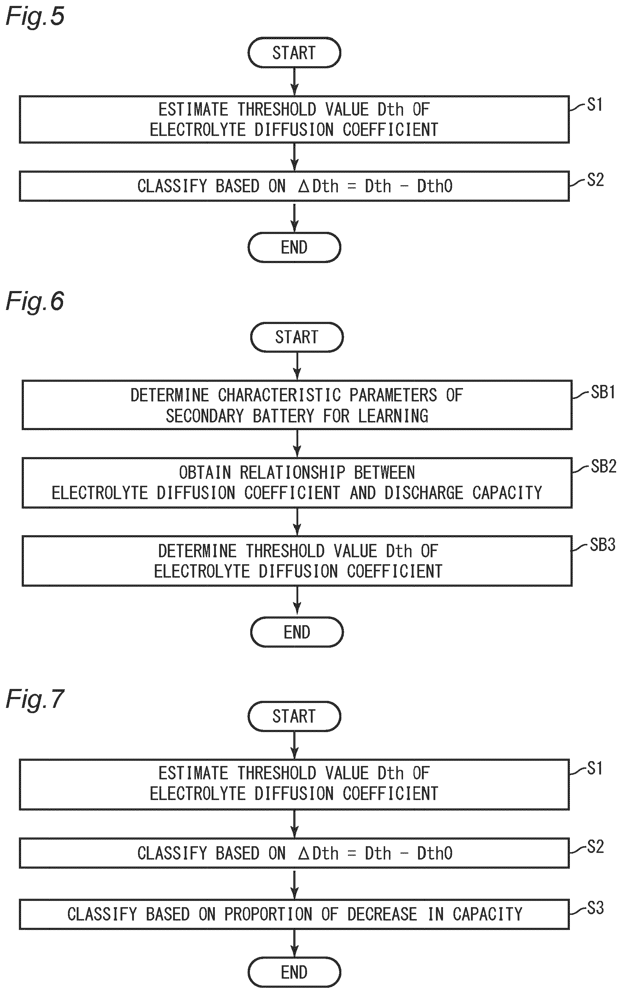

FIG. 5 is a flow chart of a method of determining the recyclability of an electrode of a secondary battery according to a first embodiment of the present invention. The recyclability determination method includes: a threshold value estimation step (step S1) in which a threshold value Dth of electrolyte diffusion coefficient of the battery subject to determination is estimated using a learned model and based on input data, the input data being data including some of the characteristic parameters of the battery subject to determination; and a classification step (step S2) in which the threshold value Dth and a threshold value Dth0 of electrolyte diffusion coefficient of the battery subject to determination or a secondary battery of the same type as the battery subject to determination before deterioration are compared to classify the battery subject to determination based on the difference between the threshold value Dth and the threshold value Dth0, ΔDth = Dth - Dth0. These steps will now be described in detail.

### Threshold Value Estimation Step

According to the present embodiment, first, a "learned model" described further below is used to estimate a threshold value Dth of electrolyte diffusion coefficient of the battery subject to determination (step S1).

### Learned Model

The learned model is an estimation model, input data (explanatory variables) and output data (objective variable) of which are respectively data including some of the characteristic parameters of the secondary battery and the threshold value of the electrolyte diffusion coefficient of the secondary battery, and the estimation model estimates the output data from the input data. The learned model is obtained by machine learning using teacher data created in advance using a plurality of secondary batteries (hereinafter referred to as "secondary batteries for learning").

### Creation of Teacher Data

FIG. 6 is a flowchart illustrating an example of a method for creating the teacher data. This method for creating the teacher data includes a process of determining characteristic parameters of the secondary battery for learning (step SB1), a process of obtaining a relationship between an electrolyte diffusion coefficient and a discharge capacity of the secondary battery for learning (step SB2), and a process of determining a threshold value of the electrolyte diffusion coefficient of the secondary battery for learning (step SB3).

The teacher data is preferably created for a plurality of secondary batteries having different types of active materials of the positive and negative electrodes, different usage conditions, different degrees of deterioration, and the like. The greater the number of secondary batteries for learning (that is, the more teacher data used for machine learning), the higher the accuracy of the resulting learned model.

The process of determining the characteristic parameters of the secondary battery for learning (step SB1) is, more specifically, a process of estimating, on the basis of data obtained by measuring load characteristics of the actual battery, for example, the characteristic parameters of the actual battery by using a model equation. This estimation can be made in the same manner as in the process of estimating the characteristic parameters of the target battery at the time of diagnosis (step SA1). Note that, in the process of determining the characteristic parameters of the secondary battery for learning (step SB1), it is not necessary to analyze all target secondary batteries for learning using data (actual measurement data) obtained by measuring the load characteristics of each actual battery. For a secondary battery for learning similar to an actual battery already analyzed, the characteristic parameters may be determined on the basis of data obtained by the analysis of the actual battery (for example, by changing some of the characteristic parameters obtained by the analysis of the actual battery). However, for a secondary battery for learning having a significantly different shape or the like, preferably the characteristic parameters are estimated by analysis using actual measurement data.

The process of obtaining the relationship between the electrolyte diffusion coefficient and the discharge capacity of the secondary battery for learning (step SB2) is, more specifically, a process of obtaining, on the basis of the model equation used in step SB1 and the characteristic parameters of the secondary battery for learning determined in step SB1, the discharge capacity when the electrolyte diffusion coefficient of the secondary battery for learning is changed, and obtaining the relationship between the electrolyte diffusion coefficient and the discharge capacity of the secondary battery for learning. The process of obtaining the relationship between the electrolyte diffusion coefficient and the discharge capacity of the secondary battery for learning (step SB2) can be performed in the same manner as in the process of obtaining the relationship between the electrolyte diffusion coefficient and the discharge capacity of the target battery (step SA2 in FIG. 1).

The process of determining the threshold value of the electrolyte diffusion coefficient of the secondary battery for learning (step SB3), more specifically, is a process of determining, on the basis of the relationship between the electrolyte diffusion coefficient and the discharge capacity of the secondary battery for learning obtained in step SB2, the threshold value of the electrolyte diffusion coefficient of the secondary battery for learning. The process of determining the threshold value of the electrolyte diffusion coefficient of the secondary battery for learning (step SB3) can be performed in the same manner as in the process of determining the threshold value Dth of the electrolyte diffusion coefficient of the target battery (step SA3 in FIG. 1).

The processes described above (step SB1 to step SB3) are performed for a plurality of the secondary batteries for learning to determine the threshold value of the electrolyte diffusion coefficient for each of the plurality of secondary batteries for learning. The teacher data is created by selecting, as input data (explanatory variables), several datasets selected from the characteristic parameters of the secondary battery for learning and using, as output data, the threshold value of the electrolyte diffusion coefficient.

The input data includes some of the characteristic parameters of each secondary battery for learning determined at step SB1. Preferably, the input data is only composed of characteristic parameters that are relatively easy to obtain. Specifically, the input data preferably includes no characteristic parameters that would require simulation-based analysis to obtain and that would change as cycle deterioration progresses (e.g., electrolyte conductivity). The input data may include characteristic parameters that require simulation-based analysis to obtain but that hardly change as cycle deterioration progresses (e.g., the heat capacity of the secondary battery). Further, the input data may include characteristic parameters that change as cycle deterioration progresses but whose amounts of change are predictable (e.g., amounts of expansion of the positive and negative electrodes).

The input data preferably includes the discharge capacity of each secondary battery for learning and the amount of decrease in voltage for a predetermined period of time since the initiation of discharge (e.g., 1 second) (or the amount of increase in voltage for a predetermined period of time since the initiation of charge). The discharge capacity may be obtained, for example, by a measurement at 0.2 C for five hours, or an equivalent measurement. The amount of decrease in voltage (or amount of increase in voltage) for a predetermined period of time may be obtained from charge data or discharge data (hereinafter referred to as "charge/discharge data"). To increase efficiency, it is preferable that this "predetermined period of time" is short (e.g., not longer than 10 seconds).

While the charge/discharge data may be replaced by data used for measuring discharge capacity, it is preferable that data with relatively high current values of about 0.5 to 1.5 C is present. Although the charge/discharge rate is not limited to any particular magnitude, during the use of the learned model that has been built (i.e., during step S1 in FIG. 5), amounts of decrease in voltage obtained from data with the same current values need to be used as input data. If too high a rate is used, measurements after deterioration may be difficult; if the rate is too low, changes in Dth may be small, making verification difficult.

The input data further preferably includes, for each of the secondary batteries for learning, one or more selected from the group consisting of the electrode area, the average current value during use, the positive electrode application amount, the positive electrode active material type, the positive electrode porosity (i.e., porosity of the positive electrode mixture layer), the negative electrode active material type, the negative electrode porosity (i.e., porosity of the negative electrode mixture layer) and the heat capacity. All of these parameters are relatively easy to obtain and have relatively large effects on precision in estimation.

Among the parameters mentioned above, the electrode area, the positive electrode application amount, the positive electrode active material type, and the negative electrode active material type do not change with use, and thus the data at the time of manufacture of new batteries can be used. For the positive electrode porosity and negative electrode porosity, the data at the time of manufacture of new batteries can be used. Alternatively, because a typical expansion amount is generally known according to the type of active material, a maximum value expected after deterioration may be used. The heat capacity of the secondary battery can be estimated in step SB1, for example. Note that, with the heat capacity being the same if the type is the same, the estimation of the heat capacity may be performed only once for secondary batteries of the same type and may be treated as a constant thereafter.

The input data may include, in addition to the aforementioned, an average temperature during use, a separator thickness, and the like.

### Generation of Learned Model

The estimation model (learned model) for estimating the output data (objective variable) from input data (explanatory variables) is generated by machine learning by using the generated teacher data. An algorithm of the machine learning is not particularly limited. For example, nonlinear support vector regression can be used.

In the secondary battery diagnostic method (FIG. 5) according to the present embodiment, the threshold value Dth of the electrolyte diffusion coefficient of the battery subject to determination is estimated on the basis of the input data, the input data being data including some of the characteristic parameters of the battery subject to determination (step S1).

The input data used in the threshold value estimation process (step S1) is input data corresponding to the input data used in the machine learning. For example, when the discharge capacity of each secondary battery for learning and the amount of decrease in voltage for a predetermined period of time since the initiation of discharge (or amount of increase in voltage for a predetermined period of time since the initiation of charge) are used as the input data in the machine learning, the discharge capacity of the battery subject to determination and the amount of decrease in voltage for a predetermined period of time (e.g., 1 sec) since the initiation of charge (or amount of increase in voltage for a predetermined period of time since the initiation of charge) are used as the input data in the threshold value estimation step.

According to the present embodiment, once the learned model is generated, the process of obtaining the relationship between the electrolyte diffusion coefficient and the discharge capacity (step SA2 in FIG. 1) does not need to be performed each time a determination is performed, making it possible to evaluate the remaining life of the secondary battery more easily. Further, if the input data includes no characteristic parameters that would require simulation-based analysis to obtain and whose characteristic parameters would change as cycle deterioration progresses, simulation during determination may be omitted.

### Classification Step

Next, the threshold value Dth and the threshold value Dth0 of electrolyte diffusion coefficient of the battery subject to determination or a secondary battery of the same type as the battery subject to determination before deterioration are compared, and the secondary battery subject to determination is classified based on the difference between the threshold values Dth and Dth0, ΔDth = Dth - Dth0 (step S2).

The threshold value Dth0 is a threshold value of electrolyte diffusion coefficient of the battery subject to determination or a secondary battery of the same type as the battery subject to determination before deterioration. A battery "before deterioration" is preferably a battery before the beginning of use, i.e., a new battery. As is the case with the battery subject to determination, the threshold value Dth0 may be estimated from the learned model based on data including some of the characteristic parameters, or may be determined in advance before deterioration by performing the same steps as steps SB1 to SB3 on the battery subject to determination or a secondary battery of the same type as the battery subject to determination.

"Secondary battery of the same type as the battery subject to determination" means a secondary battery that is generally the same as the battery subject to determination in terms of the material and shape of the positive and negative electrodes, as well as the type and amount of the electrolyte, for example. For example, if the battery subject to determination is a manufactured product, "secondary battery of the same type as the battery subject to determination" means a secondary battery of the same model number, for example.

According to the present embodiment, the battery subject to determination is classified based on the difference between the threshold values Dth and Dth0, ΔDth = Dth - Dth0. For example, if the difference ΔDth is not larger than a predetermined border value, the battery subject to determination is classified into a first classification; if the difference ΔDth is larger than the predetermined border value, the battery subject to determination is classified into a second classification.

It has been found by experiment that an electrode of a secondary battery is highly likely to have experienced structural deterioration if the threshold value Dth has been changing in an increasing trend as cycle deterioration progressed, i.e., ΔDth > 0. In view of this, for example, the "predetermined border value" may be zero and it may be determined that an electrode of a secondary battery with ΔDth larger than zero (i.e., secondary battery classified into the second classification) is not suitable for horizontal recycling nor wet recycling.

ΔDth contains an error in analysis of about 0.05 x 10⁻⁶cm²/sec, inclusive of the error occurring during the estimation by the learned model. In view of this, the above-mentioned "predetermined border value" (i.e., border value for separating the first and second classifications) is preferably set to a value within a range of -0.05 x 10⁻⁶ to 0.05 x 10⁻⁶cm²/sec. For example, if the "predetermined border value" is set to 0.05 x 10⁻⁶cm²/sec, a battery subject to determination is classified into the first classification if the difference ΔDth is not larger than 0.05 x 10⁻⁶cm²/sec, and into the second classification if the difference ΔDth is larger than 0.05 x 10⁻⁶cm²/sec.

The classified secondary battery may be subjected to further measurement and/or testing to determine a type of recycling. For example, the classifying step (step S2) may be performed as a primary screening and further measurement and/or testing may only be performed on the secondary batteries classified into the first classification or those classified into the second classification. Furthermore, the first and second classifications may require different additional measurements and tests.

A method of determining the recyclability of an electrode of a secondary battery according to the first embodiment of the present invention has been described. The present embodiment allows determination of the degree of deterioration of an electrode to be recycled.

### Second Embodiment

FIG. 7 is a flow chart of a method of determining the recyclability of an electrode of a secondary battery according to a second embodiment of the present invention. In addition to the steps included in the recyclability determination method according to the first embodiment (FIG. 3), the present recyclability determination method further includes the step of classifying the battery subject to determination based on the proportion of decrease in the discharge capacity of the battery subject to determination (hereinafter referred to as "proportion of decrease in capacity") (step S3). Although FIG. 7 shows that the step of classifying the battery subject to determination based on the proportion of decrease in capacity (step S3) is performed after the step of classifying the battery subject to determination based on the difference ΔDth (step S2), the order of steps S2 and S3 may be reversed.

The proportion of decrease in capacity is the discharge capacity of the secondary battery before use (i.e., new battery) minus the discharge capacity of the secondary battery at the time of determination, divided by the discharge capacity of the secondary battery before use (i.e., new battery). Since the discharge capacity of a secondary battery decreases for various reasons, a high proportion of decrease in capacity of a secondary battery (i.e., cell) does not necessary mean that the electrode has deteriorated to the same degree. Nevertheless, if the proportion of decrease in capacity of a secondary battery is high, the electrode is also likely to have deteriorated, and may be determined to be not suitable for at least horizontal recycling.

At the step of classifying the battery subject to determination based on the proportion of decrease in capacity (step S3), secondary batteries are classified, for example, as those with a proportion of decrease in capacity lower than a predetermined threshold and those with a proportion of decrease in capacity not lower than the predetermined threshold. Although the threshold for the proportion of decrease in capacity varies depending on applications after recycling and other factors, it may be 20 to 40 %, for example.

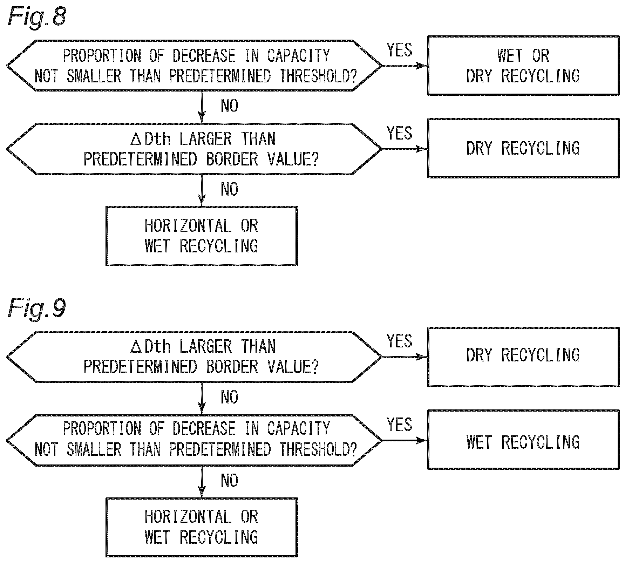

FIG. 8 illustrates an exemplary method of classifying a battery subject to determination according to the present embodiment. In this exemplary method, first, a battery is classified based on the proportion of decrease in capacity. Specifically, a battery with a proportion of decrease in capacity not lower than a predetermined threshold is classified as wet-recyclable or dry-recyclable. A battery with a proportion of decrease in capacity lower than the predetermined threshold is further classified based on the difference ΔDth. Specifically, a battery with a difference ΔDth not larger than a predetermined border value is classified as horizontally recyclable or wet-recyclable, and one with a difference ΔDth larger than the predetermined border value is classified as dry-recyclable.

FIG. 9 illustrates another exemplary method of classifying a battery subject to determination according to the present embodiment. In this exemplary method, first, a battery is classified based on the difference ΔDth. Specifically, a battery with a difference ΔDth larger than a predetermined border value is classified as dry-recyclable. A battery with a difference ΔDth not larger than the predetermined border value is further classified based on the proportion of decrease in capacity. Specifically, a battery with a proportion of decrease in capacity not smaller than a predetermined threshold value is classified as wet-recyclable, and a battery with a proportion of decrease in capacity lower than the predetermined threshold value is classified as horizontally recyclable or wet-recyclable.

The classification processes of FIGS. 8 and 9 are merely illustrative, and the recyclability determination method according to the present embodiment is not limited to these processes. Further, as is the case with the first embodiment, further measurement and testing may be conducted to determine a recycling type.

### Program and Other Means for Determining Recyclability of Electrode of Secondary Battery

The method of determining the recyclability of an electrode of a secondary battery described above may also be implemented as a computer program. A program for determining the recyclability of an electrode of a secondary battery according to an embodiment of the present invention is a program for determining the recyclability of an electrode of a secondary battery by determining the degree of deterioration of an electrode included in a secondary battery subject to determination, the program being configured to cause a computer to perform: a threshold value estimation step in which a threshold value Dth of electrolyte diffusion coefficient of the secondary battery subject to determination is estimated using a learned model and based on input data, the input data being data including some of the characteristic parameters of the secondary battery subject to determination; and a classification step in which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on the difference between the threshold value Dth and the threshold value Dth0, ΔDth = Dth - Dth0. The learned model is generated with respect to a plurality of secondary batteries for learning by performing: for each of the plurality of secondary batteries for learning, determining characteristic parameters of the secondary battery for learning; based on a predetermined model equation and the characteristic parameters of the secondary battery for learning, obtaining a discharge capacity found when the electrolyte diffusion coefficient of the secondary battery for learning has been changed and obtaining the relationship between the electrolyte diffusion coefficient and the discharge capacity of the secondary battery for learning; based on the relationship between the electrolyte diffusion coefficient and the discharge capacity of the secondary battery for learning, determining a threshold value of electrolyte diffusion coefficient of the secondary battery for learning; and running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

The method of determining the recyclability of an electrode of a secondary battery described above can also be realized as computer-readable recording medium in which the computer program described above is recorded.

The method of determining the recyclability of an electrode of a secondary battery described above may also be implemented as a computer system. A computer system for determining the recyclability of an electrode of a secondary battery according to an embodiment of the present invention is a computer system for determining the recyclability of an electrode of a secondary battery by determining the degree of deterioration of an electrode included in a secondary battery subject to determination, the computer system including a memory and a processor, the processor being configured to perform, in accordance with a program in the memory and based on data obtained by measuring the battery subject to determination: a threshold value estimation step in which a threshold value Dth of electrolyte diffusion coefficient of the secondary battery subject to determination is estimated using a learned model and based on input data, the input data being data including some of the characteristic parameters of the secondary battery subject to determination; and a classification step in which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on the difference between the threshold value Dth and the threshold value Dth0, ΔDth = Dth - Dth0. The learned model is generated with respect to a plurality of secondary batteries for learning by performing: for each of the plurality of secondary batteries for learning, determining characteristic parameters of the secondary battery for learning; based on a predetermined model equation and the characteristic parameters of the secondary battery for learning, obtaining a discharge capacity found when the electrolyte diffusion coefficient of the secondary battery for learning has been changed and obtaining the relationship between the electrolyte diffusion coefficient and the discharge capacity of the secondary battery for learning; based on the relationship between the electrolyte diffusion coefficient and the discharge capacity of the secondary battery for learning, determining a threshold value of electrolyte diffusion coefficient of the secondary battery for learning; and running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

An apparatus for determining the recyclability of an electrode of a secondary battery according to an embodiment of the present invention is an apparatus for determining the recyclability of an electrode of a secondary battery by determining the degree of deterioration of an electrode included in a secondary battery subject to determination, including: a threshold value estimation device with which a threshold value Dth of electrolyte diffusion coefficient of the secondary battery subject to determination is estimated using a learned model and based on input data, the input data being data including some of the characteristic parameters of the secondary battery subject to determination; and a classification device with which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on the difference between the threshold value Dth and the threshold value Dth0, ΔDth = Dth - Dth0. The learned model is generated with respect to a plurality of secondary batteries for learning by performing: for each of the plurality of secondary batteries for learning, determining characteristic parameters of the secondary battery for learning; based on a predetermined model equation and the characteristic parameters of the secondary battery for learning, obtaining a discharge capacity found when the electrolyte diffusion coefficient of the secondary battery for learning has been changed and obtaining the relationship between the electrolyte diffusion coefficient and the discharge capacity of the secondary battery for learning; based on the relationship between the electrolyte diffusion coefficient and the discharge capacity of the secondary battery for learning, determining a threshold value of electrolyte diffusion coefficient of the secondary battery for learning, and running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

An apparatus for determining the recyclability of an electrode of a secondary battery according to an embodiment of the present invention is an apparatus for determining the recyclability of an electrode of a secondary battery by determining the degree of deterioration of an electrode included in a secondary battery subject to determination, including: a first data generation device configured to determine, for each of a plurality of secondary batteries for learning, the characteristic parameters of the secondary battery for learning; a second data generation device configured to obtain, based on a predetermined model equation and the characteristic parameters of the secondary battery for learning, a discharge capacity found when the electrolyte diffusion coefficient of the secondary battery for learning has been changed, and obtain the relationship between the electrolyte diffusion coefficient and the discharge capacity of the secondary battery for learning; a third data generation device configured to determine, based on the relationship between the electrolyte diffusion coefficient and the discharge capacity of the secondary battery for learning, a threshold value of electrolyte diffusion coefficient of the secondary battery for learning; a model generation device configured to generate a learned model through machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning; a threshold value estimation device configured to estimate, using the learned model and based on input data, a threshold value Dth of electrolyte diffusion coefficient of the secondary battery subject to determination, the input data being data including some of the characteristic parameters of the secondary battery subject to determination; and a classification device configured to compare the threshold value Dth and the threshold value Dth0 of electrolyte diffusion coefficient of the secondary battery subject to determination or a secondary battery of the same type as the secondary battery subject to determination before deterioration and classify the secondary battery subject to determination based on the difference between the threshold value Dth and the threshold value Dth0, ΔDth = Dth - Dth0.

### Examples

Hereinafter, the present invention will be described more specifically with reference to examples. The present invention is not limited to these examples.

### Secondary Battery Diagnostic Method

A plurality of medium-sized laminate-type cells having a rated capacity of 5 Ah and a plurality of small-sized laminate-type cells having a rated capacity of 36 mAh were fabricated.

### Medium-Sized Laminate-Type Cell

### Fabrication of Positive Electrode

A positive-electrode-mixture-containing slurry was prepared by uniformly mixing 93 parts by mass of LiCoO₂ as a positive electrode active material, 3 parts by mass of carbon black as a conductive aid, and 4 parts by mass of polyvinylidene fluoride (PVDF) as a binder, using N-methyl-2-pyrrolidone (NMP) as a solvent. This positive-electrode-mixture-containing slurry was applied to both sides of a positive electrode current collector made of aluminum foil having a thickness of 15 µm, dried, subsequently pressure-formed using a roller press machine, and then punched out so that a portion of the positive electrode current collector not coated with the positive-electrode-mixture-containing slurry became a tab portion, thereby fabricating the positive electrode.

### Fabrication of Negative Electrode

A negative-electrode-mixture-containing slurry was prepared by mixing 97.5 parts by mass of graphite as a negative electrode active material, 1.5 parts by mass of carboxymethyl cellulose as a binder, and 1 part by mass of styrene-butadiene rubber, and then adding an appropriate amount of water and thoroughly mixing. This negative-electrode-mixture-containing slurry was applied to both sides of a negative electrode current collector made of copper foil having a thickness of 10 µm, dried, subsequently pressure-formed using a roller press machine, and then punched out so that a portion of the negative electrode current collector not coated with the negative-electrode-mixture-containing slurry became a tab portion, thereby fabricating the negative electrode.

### Fabrication of Battery

Seven of the positive electrodes described above and eight of the negative electrodes described above were alternately layered with a polyolefin microporous film separator interposed therebetween to form a multilayer electrode body, the polyolefin microporous film separator having a thickness of 18 µm and a three-layer structure consisting of a polyethylene layer as a middle layer and two polypropylene layers as outer layers.

Next, the tab portions of the positive electrodes of the multilayer electrode body were welded together and the tab portions of the negative electrodes of the multilayer electrode body were welded together and leads were connected respectively thereto. Then, the multilayer electrode body was enclosed inside an outer packaging made from an aluminum laminate film together with a non-aqueous electrolyte prepared by dissolving LiPF₆ at a concentration of 1 mol/L in a solution obtained by mixing ethylene carbonate, diethyl carbonate, and methyl ethyl carbonate at a volume ratio of 1:1:1, and further dissolving vinylene carbonate in an amount of 1 mass%, thereby fabricating a non-aqueous electrolyte secondary battery with a rated capacity of 5 Ah.

### Small-Sized Laminate-Type Cell

### Fabrication of Positive Electrode

A positive-electrode-mixture-containing slurry was prepared by uniformly mixing 94 parts by mass of LiCoO₂ as the positive electrode active material, 4 parts by mass of carbon black as the conductive aid, and 2 parts by mass of PVDF as the binder, using NMP as the solvent. This positive-electrode-mixture-containing slurry was applied to both sides of a positive electrode current collector made of aluminum foil having a thickness of 15 µm, dried, subsequently pressure-formed using a roller press machine, and then punched out so that a portion of the positive electrode current collector not coated with the positive-electrode-mixture-containing slurry became a tab portion, thereby fabricating the positive electrode.

### Fabrication of Negative Electrode

A negative-electrode-mixture-containing slurry was prepared by mixing 94.5 parts by mass of graphite and 3 parts by mass of SiO particles (D50: 5.0 µm) including a front surface coated with carbon as the negative electrode active material, 1.5 parts by mass of carboxymethyl cellulose and 1 part by mass of styrene-butadiene rubber as the binder, and then adding an appropriate amount of water and thoroughly mixing. This negative-electrode-mixture-containing slurry was applied to both sides of a negative electrode current collector made of copper foil having a thickness of 10 µm, dried, subsequently pressure-formed using a roller press machine, and then punched out so that a portion of the negative electrode current collector not coated with the negative-electrode-mixture-containing slurry became a tab portion, thereby fabricating the negative electrode.

### Fabrication of Battery

The positive electrode described above and the negative electrode described above were layered with a polyolefin microporous film separator interposed therebetween to form a multilayer electrode body, the polyolefin microporous film separator having a thickness of 12 µm and a three-layer structure consisting of a polyethylene layer as the middle layer and two polypropylene layers as the outer layers.

Next, the tab portions of the positive electrodes of the multilayer electrode body were welded together and the tab portions of the negative electrodes were welded together before leads were connected to the respective tabs. Then, the multilayer electrode body was enclosed inside an outer packaging made from an aluminum laminate film together with a non-aqueous electrolyte prepared by dissolving LiPF₆ at a concentration of 1 mol/L in a solution obtained by mixing ethylene carbonate and diethyl carbonate at a volume ratio of 3:7, and further dissolving vinylene carbonate in an amount of 1 mass%, thereby fabricating a non-aqueous electrolyte secondary battery with a rated capacity of 36 mAh.

### Fabrication of Deteriorated Cells

A plurality of deteriorated cells having discharge capacities reduced to 4.8 Ah were fabricated by conducting charge/discharge cycle tests on the medium-sized laminate-type cells having a rated capacity of 5 Ah under a plurality of conditions different in terms of charge/discharge rate, ambient temperature, and the like. Similarly, a plurality of deteriorated cells having discharge capacities reduced to 35 mAh were fabricated by conducting charge/discharge cycle tests on the small-sized laminate-type cells having a rated capacity of 36 mAh under a plurality of conditions different in charge/discharge rate, ambient temperature, and the like.

### Measurement of Load Characteristics

The load characteristics of each of the deteriorated cells were measured. Specifically, the discharge curve of each cell was measured at discharge rates of 0.02 C, 0.2 C, 0.5 C and 1 C with respect to the initial rated capacity of that cell.

### Diagnosis of Secondary Battery

The secondary battery diagnostic method described in the embodiment was carried out using these deteriorated cells as target batteries. The analysis (simulation) was carried out by the software Battery Design Studio available from Siemens AG. Among the basic specifications, a solvent ratio and a salt concentration were input using the same values as those at the time of fabrication (because the values at the time of diagnosis cannot be measured).

The relationship between the electrolyte diffusion coefficient and the discharge capacity was acquired by estimating the characteristic parameters at the time of diagnosis and subsequently, on the basis of the estimated characteristic parameters, obtaining the discharge capacity at an ambient temperature of 45°C and a discharge rate of 0.5 C while changing the electrolyte diffusion coefficient. The difference ΔD between the threshold value Dth and the electrolyte diffusion coefficient Dn at the time of diagnosis was obtained with the point at which tangents of each curve before and after the onset of a sharp drop in discharge capacity intersect defined as the threshold value Dth.

### Measurement of Remaining Life

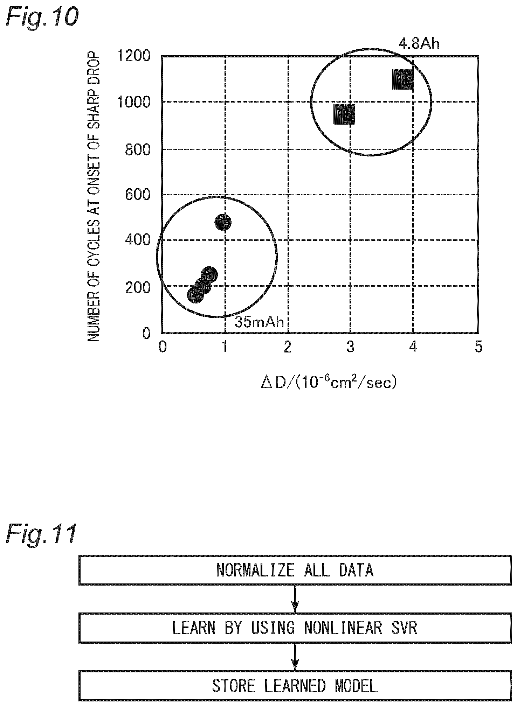

These deteriorated cells were subjected to charge/discharge cycle tests under the same conditions, and the number of charge/discharge cycles until a sharp drop in discharge capacity occurred (number of cycles at the onset of a sharp drop) was measured. FIG. 10 shows the relationship between ΔD obtained by the diagnosis and the number of cycles at the onset of a sharp drop.

As shown in FIG. 10, even when the discharge capacities at the time of diagnosis were equivalent (4.8 Ah or 35 mAh), a difference in ΔD was confirmed. Further, the number of cycles at the onset of a sharp drop was found to also change in accordance with ΔD, confirming the validity of this diagnostic method.

### Generation of Learned Model

Next, secondary batteries using lithium cobalt oxide (LCO) or lithium nickel cobalt manganese oxide (NCM) as a positive electrode active material and graphite or SiO as a negative electrode active material were prepared. The load characteristics of these secondary batteries were measured, and the threshold values of the electrolyte diffusion coefficients were obtained by the method described above. Machine learning was performed using this data as teacher data (however, some data was used not as teacher data (training data) but as verification data (validation data)) to generate a learned model.

As input data (explanatory variables), the nine variables below were used.
1. Discharge capacity
2. Electrode area
3. Magnitude of current when secondary battery is used
4. Positive electrode application amount
5. Positive electrode active material type
6. Positive electrode porosity
7. Negative electrode porosity
8. Electrolyte conductivity
9. Heat capacity of secondary battery

The machine learning was performed using scikit-learn, an open source library. FIG. 11 illustrates the procedure of the machine learning. As the algorithm for machine learning, nonlinear support vector regression (nonlinear SVR) was used.

First, all data were normalized by the equation below. $Xn = \left(X-Xa\right) / Xd$ X: Original value, Xn: Value after normalization, Xa: Average value of variable X, Xd: Standard deviation

In the non-linear SVR, a weighting coefficient w was obtained, minimizing the function below. $\begin{matrix}\frac{1}{2} {\left‖w\right‖}^{2} + C {\sum }_{i = 1}^{n} h \left({y}^{\left(i\right)}-f\left({x}^{\left(i\right)}\right)\right) \\ f \left({x}^{\left(i\right)}\right) = ϕ \left({x}^{\left(i\right)}\right) w + c\end{matrix}$ Φ(x): Parameter after nonlinear mapping of original x, w: Weighting coefficient of each parameter, c: Constant, y: Target variable (threshold value of electrolyte diffusion coefficient)

h(y⁽ⁱ⁾ - f(x⁽ⁱ⁾)) is a function represented by the equation below. $h \left({y}^{\left(i\right)}-f\left({x}^{\left(i\right)}\right)\right) = max \left(0,\left|{y}^{\left(i\right)}-f\left({x}^{\left(i\right)}\right)\right|-ε\right)$

C and ε are so-called hyperparameters.

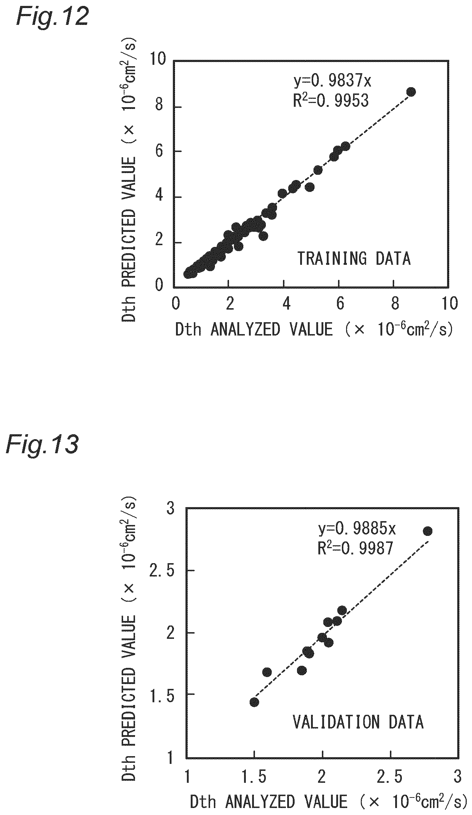

FIG. 12 and FIG. 13 are scatter diagrams obtained by plotting predicted values of the threshold value of the electrolyte diffusion coefficient on the vertical axis and plotting true values (values obtained by analysis) on the horizontal axis. FIG. 12 is a diagram corresponding to the training data (100 data used) and FIG. 13 is a diagram corresponding to the validation data (data not used for learning). As shown in FIG. 13, the values obtained by analysis can be predicted with favorable accuracy even for non-learning data.

### Contribution of Electrolyte Conductivity to Dth

The influence of electrolyte conductivity on Dth was studied using a learned model.

For a certain secondary battery, when the electrolyte conductivity was decreased from 8.90 (mS/cm) to 1.75 (mS/cm) without changing other parameters, Dth increased from 2.705 × 10⁻⁶ (cm²/s) to 2.758 × 10⁻⁶ (cm²/s).

For the same secondary battery, when the heat capacity was halved without changing the electrolyte conductivity, Dth decreased from 2.705 × 10⁻⁶ (cm²/s) to 2.643 × 10⁻⁶ (cm²/s).

Next, a case in which the heat capacity is halved and the electrolyte conductivity is reduced to 1.75 (mS/cm) will be considered. From the results described above, it is expected that Dth will be 2.643 × 10⁻⁶ (cm²/s) by halving the heat capacity, and then will increase by reducing the electrolyte conductivity. However, according to the results of the learned model, the Dth decreased from 2.643 × 10⁻⁶ (cm²/s) to 2.575 × 10⁻⁶ (cm²/s).

Thus, depending on the amount of change in other parameters, the influence of the electrolyte conductivity on Dth is not constant, and a correlation between parameters exists. This reveals that simple prediction is difficult.

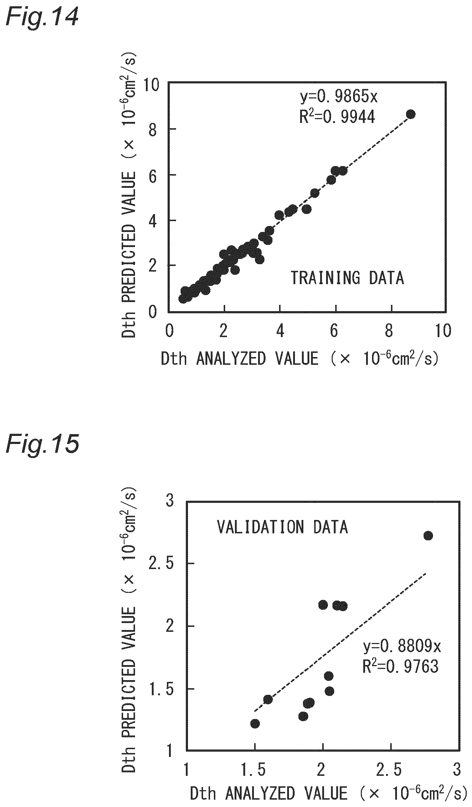

For comparison, machine learning was performed by removing the electrolyte conductivity from the input data (explanatory variables), and a learned model was created. FIG. 14 and FIG. 15 are scatter diagrams obtained by plotting predicted values of the threshold value of the electrolyte diffusion coefficient on the vertical axis and plotting true values (values obtained by analysis) on the horizontal axis. FIG. 14 is a diagram corresponding to training data, and FIG. 15 is a diagram corresponding to validation data (data not used for learning). As shown in FIG. 15, in this learned model, the accuracy of prediction was inferior as compared with the result of the learned model in which the electrolyte conductivity was included in the input data (FIG. 13).

From this, it is understood that the accuracy of prediction can be improved by including the electrolyte conductivity in the input data.

### Method of Determining Recyclability of Electrode of Secondary Battery

Next, a plurality of secondary batteries with different types of electrodes, i.e. positive and negative, and different discharge capacities were prepared and, for each of the secondary batteries, the initial cell capacity, the initial threshold value (i.e., before deterioration) of electrolyte diffusion coefficient (Dth0), the cell capacity after deterioration, and the threshold value of electrolyte diffusion coefficient after deterioration (Dth) were determined.

Specifically, based on the laminate-type cells fabricated by the secondary battery diagnostic method, the areas of the positive and negative electrodes and separator and the amount of electrolyte were modified in accordance with target rated capacity to fabricate medium-sized laminate-type cells with rated capacities of 5 Ah, 2.7 Ah and 13 Ah. In the medium-sized laminate-type cell with 13 Ah, LiCoO₂ was be replaced by LiNi_{0.5}Co_{0.2}Mn_{0.3}O₂ to serve as the positive electrode active material.

Charge/discharge cycle testing was conducted on medium-sized laminate-type cells with a rated capacity of 5 Ah with different charge/discharge rates and different environment temperatures, for example, to fabricate deteriorated cells with reduced discharge capacities of 4.5 Ah and 3.7 Ah. Similarly, a medium-sized laminate-type cell with a rated capacity of 2.7 Ah was used to produce a deteriorated cell with a reduced discharge capacity of 2.4 Ah, and medium-sized laminate-type cells with a rated capacity of 13 Ah were used to fabricate deteriorated cells with reduced discharge capacities of 11 Ah and 12.5 Ah. As used herein, the "discharge capacity" of a battery after deterioration is the discharge capacity measured at a current value of 0.2 C with respect to the "rated capacity" of that battery (such a discharge capacity will be hereinafter referred to as "cell capacity").

For each of these cells, the load characteristics of the cell before and after deterioration were measured. Specifically, the discharge curve of each cell was measured at discharge rates of 0.02 C, 0.2 C, 0.5 C and 1 C with respect to the initial rated capacity of that cell.

Next, a cell before deterioration was analyzed to determine a threshold value Dth0 of electrolyte diffusion coefficient. The analysis (i.e., simulation) was conducted using the software Battery Design Studio available from Siemens AG. Among the basic specifications, solvent ratio and salt concentration were input with the same values as those at the time of fabrication.

After the characteristic parameters of the cell before deterioration were estimated, based on the estimated characteristic parameters, discharge capacities at an environment temperature of 45 °C and a discharge rate of 0.5 C were calculated for different electrolyte diffusion coefficients to obtain the relationship between electrolyte diffusion coefficient and discharge capacity. The point at which tangent lines of portions of the curve before and after the onset of the sharp drop in discharge capacity crossed each other was determined, which provided the threshold value Dth0.

Next, a threshold value Dth of electrolyte diffusion coefficient of the cell after deterioration was determined: Among the characteristic parameters estimated when the threshold value Dth0 of electrolyte diffusion coefficient before deterioration had been determined, only the cell capacity, electrolyte diffusion coefficient and electrolyte conductivity were changed and the other characteristic parameters were fixed to the characteristic parameters estimated when the threshold value Dth0 of electrolyte diffusion coefficient before deterioration had been determined, to perform fitting to estimate the threshold value Dth of electrolyte diffusion coefficient after deterioration. The magnitude of electric current during discharge simulation was the same as the magnitude of current at the time when the threshold value Dth0 was determined. Specifically, the magnitude for each battery was set to a value equivalent to 0.5 C with respect to the capacity (i.e., rated capacity) of that battery before deterioration.

The results are shown in Table 1. In Table 1, "LCO" (in Determination Examples 1 to 3) indicates lithium cobalt oxide, "SiO·graphite" (in Determination Example 3) indicates a mixture of graphite and SiO particles with their surfaces covered with carbon, and "NCM" (in Determination Examples 4 and 5) indicates lithium nickel/cobalt/manganese oxide.

**[Table 1]**

| | Positive/negative electrodes | Cell capacity (Ah) | | | Threshold of electrolyte diffusion coefficient (×10⁻⁶cm²/sec) | | | Determination |
|---|---|---|---|---|---|---|---|---|
| | | Initial | After deterioration | Proportion of decrease | Initial | After deterioration | Difference | |
| Determ. Ex. 1 | LCO/graphite | 5.01 | 4.52 | 9.80% | 2.758 | 2.237 | -0.521 | good |
| Determ. Ex. 2 | LCO/graphite | 5.01 | 3.73 | **25.50%** | 2.758 | 3.121 | **0.363** | poor |
| Determ. Ex. 3 | LCO/SiO▪graphite | 2.72 | 2.45 | 9.90% | 0.937 | 0.885 | -0.052 | good |
| Determ. Ex. 4 | NCM/graphite | 13.18 | 11.01 | 16.50% | 1.739 | 1.814 | **0.075** | poor |
| Determ. Ex. 5 | NCM/graphite | 13.18 | 12.49 | 5.20% | 1.739 | 1.732 | -0.007 | good |

For each of Determination Examples 1, 3 and 5, the proportion of decrease in capacity of the secondary battery (i.e., cell) was not higher than 10 %, suggesting that the proportion of decrease in capacity of the electrode was also not higher than 10 %. Further, the negative value of the difference ΔDth in the threshold value of electrolyte diffusion coefficient before and after deterioration allows an estimation that no structural deterioration of the electrode occurred, either. Thus, the electrodes of these secondary batteries can be determined to be horizontally recyclable or wet-recyclable.

On the other hand, for Determination Example 2, the proportion of decrease in capacity of the secondary battery (i.e., cell) was no lower than 25 %, which is high. It is highly likely that, for this secondary battery, the discharge capacity of the electrode also significantly decreased from its initial value. Further, the positive value of the difference ΔDth in the threshold value of electrolyte diffusion coefficient before and after deterioration allows an estimation that structural deterioration of the electrode is highly likely to have occurred. Thus, the electrode of this secondary battery can be determined to be not suitable for horizontal recycling nor wet recycling.

For Determination Example 4, the proportion of decrease in capacity of the secondary battery (i.e., cell) was low; however, the positive value of the difference ΔDth in the threshold value of electrolyte diffusion coefficient before and after deterioration allows an estimation that structural deterioration of the electrode is highly likely to have occurred. Thus, the electrode of this secondary battery can be determined to be not suitable for horizontal recycling nor wet recycling.

Next, for each determination example, the positive and negative electrodes were recovered from the secondary battery and the proportion of decrease in capacity of the positive electrode, the proportion of decrease in capacity of the negative electrode, the expansion rate of the positive electrode mixture and the expansion rate of the negative electrode mixture were measured. Further, for each determination example, a scanning electron microscopic (SEM) micrograph of the positive electrode of the secondary battery was captured and it was determined whether the active material particles had cracks. The results are shown in Table 2.

**[Table 2]**

| | Positive/negative electrodes | Determination | Proportion of decrease in capacity of negative electrode | Proportion of decrease in capacity of positive electrode | Expansion rate of negative electrode mixture | Expansion rate of positive electrode mixture | Cracks in active material |
|---|---|---|---|---|---|---|---|
| Determ. Ex. 1 | LCO/graphite | good | 16.20% | 5.90% | 8.50% | 5.70% | none |
| Determ. Ex. 2 | LCO/graphite | poor | 31.50% | 22.40% | 10.60% | 5.10% | large number |
| Determ. Ex. 3 | LCO/SiO▪graphite | good | 10.20% | 9.60% | 15.10% | 5.40% | none |
| Determ. Ex. 4 | NCM/graphite | poor | 16.30% | 6.10% | 11.10% | 4.60% | large number |
| Determ. Ex. 5 | NCM/graphite | good | 5.30% | 4.80% | 8.90% | 4.30% | very small number |

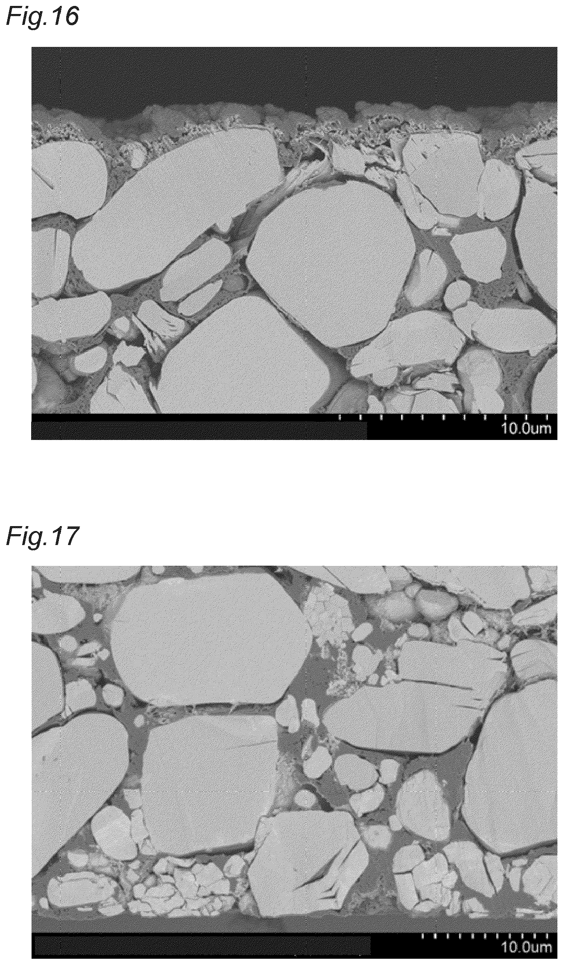

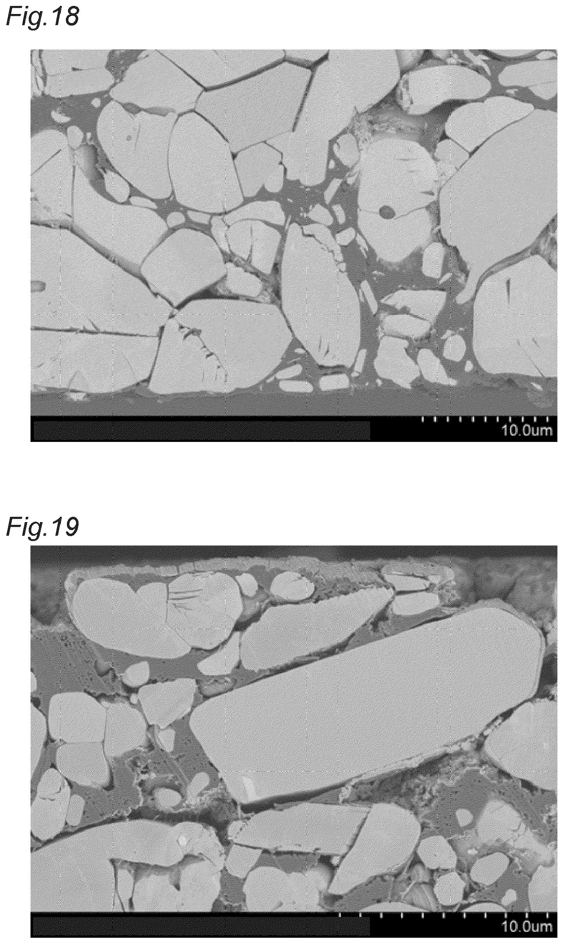

FIG. 16 shows an SEM micrograph of the positive electrodes (LCO) of Determination Examples 1 to 3 in their initial state. FIG. 17 shows an SEM micrograph of the positive electrode of Determination Example 1 after deterioration, FIG. 18 an SEM micrograph of the positive electrode of Determination Example 2 after deterioration, and FIG. 19 an SEM micrograph of the positive electrode of Determination Example 3 after deterioration. It can be seen that no cracks can be found in Determination Examples 1 and 3 (FIGS. 17 and 19), while there are large numbers of cracks in the individual particles of Determination Example 2 (FIG. 18).

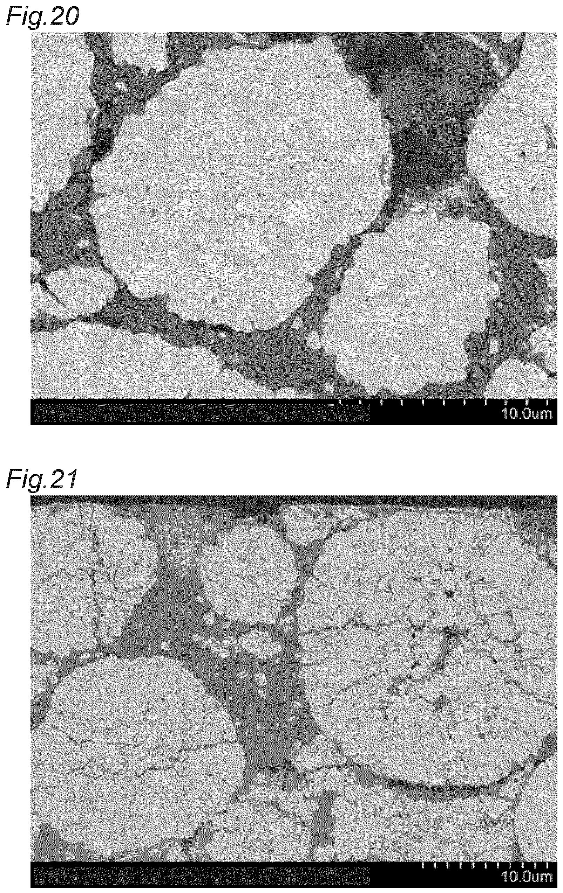

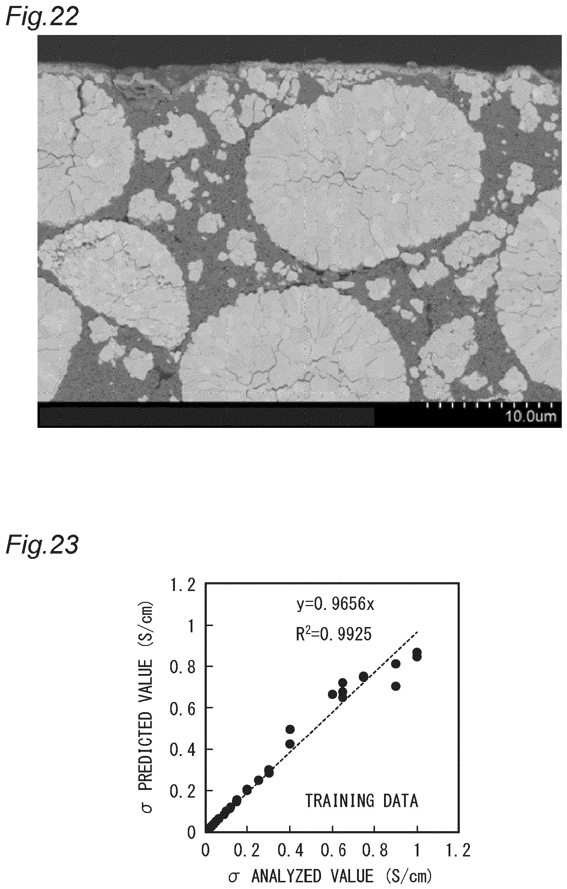

FIG. 20 shows an SEM micrograph of the positive electrodes (NCM) of Determination Examples 4 and 5 in their initial state. The NCM particles are constituted by secondary particles that are sintered bodies of primary particles. FIG. 21 shows an SEM micrograph of the positive electrode of Determination Example 4 after deterioration, and FIG. 22 an SEM micrograph of the positive electrode of Determination Example 5 after deterioration. For Determination Example 4 (FIG. 21), the particles had broken at sintering locations between primary particles, generating large numbers of cracks. On the other hand, there were only few cracks in Determination Example 5 (FIG. 22).

Table 2 and FIGS. 16 to 22 demonstrate that the determination results match well the deterioration conditions of the electrodes.

Further, for each of Determination Examples 1 and 4, the single-electrode discharge characteristics of the positive electrode as horizontally recycled were measured. The results show that Determination Example 1 initially had 0.5 C / 96 % but 0.5 C / 92 % after recycling, which means that a high level was maintained. On the other hand, Determination Example 4 initially had 0.5 C / 94 % but 0.5 C / 72 % after recycling, which is a significant decrease.

Each of the initial percentages for electrodes (0.5 C / 96 % and 0.5 C / 94 %) represents the ratio of the discharge capacity (i.e. cell capacity) at 0.5 C to the discharge capacity at 0.2 C before deterioration. Each of the percentages for the electrodes after recycling (0.5 C / 92 % and 0.5 C / 72 %) represents the ratio of the discharge capacity at 0.5 C to the discharge capacity at 0.2 C, where the discharge capacities at the current values of 0.2 C and 0.5 C were measured in the same manner as for the initial electrodes, where each capacity after deterioration indicated in Table 1 represents the "rated capacity" of the relevant battery after recycling.

For example, for Determination Example 1, the initial single-electrode discharge characteristic "0.5 C / 96 %" is the ratio of the discharge capacity measured at 0.5 C (i.e., 2.5 A) with respect to the rated capacity of 5Ah relative to the discharge capacity measured at 0.2 C (i.e., 1 A) with respect to the rated capacity of 5 Ah. The single-electrode discharge characteristic of a horizontally recycled positive electrode "0.5 C / 92 %" is the ratio of the discharge capacity measured at 0.5 C (i.e., 2.25 A) with respect to the cell capacity of 4.5 Ah after deterioration relative to the discharge capacity measured at 0.2 C (i.e., 0.9 A) with respect to the cell capacity 4.5 Ah after deterioration.

The reason why it is possible to determine whether structural deterioration of an electrode occurred based on the difference ΔDth in the threshold value of electrolyte diffusion coefficient before and after deterioration has not completely been clarified, although the following estimation is possible.

It is possible that the threshold value ΔDth of electrolyte diffusion coefficient depends on the internal resistance of the secondary battery. The electrolyte conductivity determined through the analysis herein reflects not only the ohmic resistance and actual resistance of the electrolyte, but also the interface resistance at the time of reaction at the positive and negative electrodes. Thus, the structural deterioration of the electrode (when the active material develops cracks, this generates interfaces with electric discontinuities, leading to a significant increase in resistance) is reflected by the electrolyte conductivity. This allows the assumption that investigating the threshold value Dth of electrolyte diffusion coefficient is equivalent to indirectly evaluating the structural deterioration of the electrode.

The determination results herein mainly reflect the degree of deterioration of the positive electrode. For the negative electrode, too, deterioration increases interface resistance; however, the amount of increase is usually smaller than that for the positive electrode. This is because the negative electrode deteriorates mainly due to deactivation caused by isolation of the active material particles and a shift in potential caused by consumption of Li during SEI generation, and the probability of the negative electrode experiencing structural deterioration such as cracking is lower than that for the positive electrode.

### Estimation of Electrolyte Conductivity

These results show that a look at the threshold value Dth of electrolyte diffusion coefficient enables determining whether structural deterioration of the electrode has occurred. They also show that the threshold value Dth can be estimated by an estimation model generated through machine learning and that including the discharge capacity and electrolyte conductivity of the secondary battery in the input data further increases precision in estimation.

Starting from this, if the electrolyte conductivity of a secondary battery can be estimated by a method that does not use simulation-based analysis, a simulation during determination can be omitted.

Secondary batteries with a positive electrode active material of LCO or NCM and a negative electrode active material of graphite or SiO were prepared. The load characteristics of these secondary batteries were measured and the electrolyte conductivity was estimated through a simulation-based analysis. These datasets were used as teacher data to perform machine learning similar to that for generating a learned model for estimating the threshold value Dth, thus generating a learned model for estimating electrolyte conductivity.

The input data (explanatory variables) used was composed of the nine variables listed below. Every one of these variables either can be estimated by a method that does not use simulation-based analysis or hardly changes during cycle deterioration, or for which the amount of change is predictable.
1. Discharge capacity
2. Electrode area
3. Magnitude of current when secondary battery is used
4. Positive electrode application amount
5. Positive electrode active material type
6. Positive electrode porosity (i.e., porosity of positive electrode mixture layer)
7. Negative electrode active material type
8. Negative electrode porosity (i.e., porosity of negative electrode mixture layer)
9. Amount of decrease in voltage for one second since initiation of charge

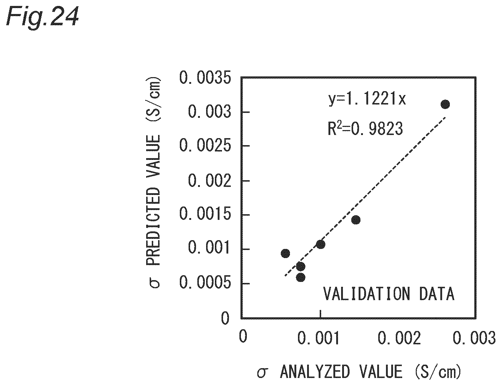

Each of FIGS. 23 and 24 is a scatter diagram obtained by plotting predicted values of electrolyte conductivity σ on the vertical axis and plotting true values (values obtained by analysis) on the horizontal axis. FIG. 23 relates to training data, while FIG. 24 relates to validation data. As shown in FIG. 24, the values obtained by analysis were predicted fairly precisely even for data that had not be learned. It is expected that further accumulating training data will improve precision.

These results demonstrate that the electrolyte conductivity of a deteriorated secondary battery can be estimated without performing simulation-based analysis. As discussed above, the threshold value Dth of electrolyte diffusion coefficient can be estimated at high precision from the discharge capacity and electrolyte conductivity of the secondary battery. Thus, the threshold value Dth can be estimated without performing simulation-based analysis.

In the above description, two learned models are generated, i.e., a learned model for estimating electrolyte conductivity and a learned model for estimating the threshold value Dth; however, it is possible in principle to consolidate these learned models into one. That is, from input data other than electrolyte conductivity, it is possible to build a learned model that directly estimates the threshold value Dth.

Although embodiments of the present invention have been described above, the present invention is not limited to the above-described embodiments, and various modifications can be falling within the scope of the appended claims.

## Claims

1. A method of determining recyclability of an electrode of a secondary battery by determining a degree of deterioration of an electrode included in a secondary battery subject to determination, comprising:
a threshold value estimation step in which a threshold value Dth of electrolyte diffusion coefficient of the secondary battery subject to determination is estimated using a learned model and based on input data, the input data being data including some of characteristic parameters of the secondary battery subject to determination; and
a classification step in which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on a difference between the threshold value Dth and the threshold value Dth0, ΔDth = Dth - Dth0,
wherein the learned model is generated with respect to a plurality of secondary batteries for learning by performing:
for each of the plurality of secondary batteries for learning,
determining characteristic parameters of the secondary battery for learning;
based on a predetermined model equation and the characteristic parameters of the secondary battery for learning, obtaining a discharge capacity found when an electrolyte diffusion coefficient of the secondary battery for learning has been changed and obtaining a relationship between the electrolyte diffusion coefficient and the discharge capacity of the secondary battery for learning;
based on the relationship between the electrolyte diffusion coefficient and the discharge capacity of the secondary battery for learning, determining a threshold value of electrolyte diffusion coefficient of the secondary battery for learning; and
running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

2. The method of determining the recyclability of an electrode of a secondary battery according to claim 1, further comprising:
classifying the secondary battery subject to determination based on a proportion of decrease in a discharge capacity of the secondary battery subject to determination.

3. The method of determining the recyclability of an electrode of a secondary battery according to claim 1, wherein:
the input data used for machine learning includes, for each of the secondary batteries for learning, the discharge capacity and at least one of an amount of decrease in voltage for a predetermined period of time since an initiation of discharge and an amount of increase in voltage for a predetermined period of time since an initiation of charge; and
the input data used for the threshold value estimation step includes a discharge capacity of the secondary battery subject to determination at a time of determination, and at least one of an amount of decrease in voltage for a predetermined period of time since an initiation of discharge and an amount of increase in voltage for a predetermined period of time from an initiation of charge.

4. The method of determining the recyclability of an electrode of a secondary battery according to claim 3, wherein:
the input data used for machine learning further includes, for each of the secondary batteries for learning, one or more selected from the group consisting of an electrode area, an average current value during use, a positive electrode application amount, a positive electrode active material type, a positive electrode porosity, a negative electrode active material type, a negative electrode porosity and a heat capacity; and
the input data used for the threshold value estimation step further includes one or more selected from the group consisting of an electrode area, an average current value during use, a positive electrode application amount, a positive electrode active material type, a positive electrode porosity, a negative electrode active material type, a negative electrode porosity and a heat capacity of the secondary battery subject to determination.

5. The method of determining the recyclability of an electrode of a secondary battery according to any one of claims 1 to 4, wherein the determining the threshold value of electrolyte diffusion coefficient of each of the secondary batteries for learning is deciding to use, as the threshold value, the electrolyte diffusion coefficient found when the discharge capacity becomes a predetermined permitted value or lower.

6. The method of determining the recyclability of an electrode of a secondary battery according to any one of claims 1 to 4, wherein determining the threshold value of electrolyte diffusion coefficient of each of the secondary batteries for learning is deciding to use, as the threshold value, the electrolyte diffusion coefficient at an onset of a sharp drop in discharge capacity.

7. The method of determining the recyclability of an electrode of a secondary battery according to any one of claims 1 to 4, wherein:
the classification step includes:
if the difference ΔDth is not larger than a predetermined border value, classifying the secondary battery subject to determination into a first classification, and, if the difference ΔDth is larger than the predetermined border value, classifying the secondary battery subject to determination into a second classification, and
the predetermined border value is set to a value within a range of -0.05 x 10⁻⁶ to 0.05 x 10⁻⁶cm²/sec.

8. The method of determining the recyclability of an electrode of a secondary battery according to any one of claims 1 to 4, wherein the electrode is a positive electrode.

9. The method of determining the recyclability of an electrode of a secondary battery according to any one of claims 1 to 4, wherein the secondary battery subject to determination is a lithium-ion battery.

10. A program for determining recyclability of an electrode of a secondary battery by determining a degree of deterioration of an electrode included in a secondary battery subject to determination, the program being configured to cause a computer to perform:
a threshold value estimation step in which a threshold value Dth of electrolyte diffusion coefficient of the secondary battery subject to determination is estimated using a learned model and based on input data, the input data being data including some of characteristic parameters of the secondary battery subject to determination; and
a classification step in which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on a difference between the threshold value Dth and the threshold value Dth0, ΔDth = Dth - Dth0,
wherein the learned model is generated with respect to a plurality of secondary batteries for learning by performing:
for each of the plurality of secondary batteries for learning,
determining characteristic parameters of the secondary battery for learning;
based on a predetermined model equation and the characteristic parameters of the secondary battery for learning, obtaining a discharge capacity found when an electrolyte diffusion coefficient of the secondary battery for learning has been changed and obtaining a relationship between the electrolyte diffusion coefficient and the discharge capacity of the secondary battery for learning;
based on the relationship between the electrolyte diffusion coefficient and the discharge capacity of the secondary battery for learning, determining a threshold value of electrolyte diffusion coefficient of the secondary battery for learning; and
running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

11. An apparatus for determining recyclability of an electrode of a secondary battery by determining a degree of deterioration of an electrode included in a secondary battery subject to determination, comprising:
a threshold value estimation device with which a threshold value Dth of electrolyte diffusion coefficient of the secondary battery subject to determination is estimated using a learned model and based on input data, the input data being data including some of characteristic parameters of the secondary battery subject to determination; and
a classification device with which the threshold value Dth and a threshold value Dth0 of electrolyte diffusion coefficient of the secondary battery subject to determination or a secondary battery of the same type as the secondary battery subject to determination before deterioration are compared to classify the secondary battery subject to determination based on a difference between the threshold value Dth and the threshold value Dth0, ΔDth = Dth - Dth0,
wherein the learned model is generated with respect to a plurality of secondary batteries for learning by performing:
for each of the plurality of secondary batteries for learning,
determining characteristic parameters of the secondary battery for learning;
based on a predetermined model equation and the characteristic parameters of the secondary battery for learning, obtaining a discharge capacity found when an electrolyte diffusion coefficient of the secondary battery for learning has been changed and obtaining a relationship between the electrolyte diffusion coefficient and the discharge capacity of the secondary battery for learning;
based on the relationship between the electrolyte diffusion coefficient and the discharge capacity of the secondary battery for learning, determining a threshold value of electrolyte diffusion coefficient of the secondary battery for learning; and
running machine learning utilizing teacher data, the teacher data obtained by using, as input data, data including some of the characteristic parameters of the secondary batteries for learning and, as output data, the threshold values determined for the electrolyte diffusion coefficients of the secondary batteries for learning.

## Patentansprüche

1. Verfahren zum Bestimmen der Wiederverwertbarkeit einer Elektrode einer Sekundärbatterie durch Bestimmen eines Degradationsausmaßes einer Elektrode, die in einer Sekundärbatterie, welche Gegenstand der Bestimmung ist, enthalten ist, umfassend:
einen Schwellenwertschätzungsschritt, in dem ein Schwellenwert Dth eines Elektrolytdiffusionskoeffizienten der Sekundärbatterie, welche Gegenstand der Bestimmung ist, unter Verwendung eines gelernten Modells und basierend auf Eingangsdaten geschätzt wird, wobei die Eingangsdaten Daten sind, die einige aus charakteristischen Parametern der Sekundärbatterie, welche Gegenstand der Bestimmung ist, umfassen; und
einen Klassifizierungsschritt, in dem der Schwellenwert Dth und ein Schwellenwert Dth0 eines Elektrolytdiffusionskoeffizienten der Sekundärbatterie, welche Gegenstand der Bestimmung ist, oder einer Sekundärbatterie desselben Typs wie die Sekundärbatterie, welche Gegenstand der Bestimmung ist, vor der Degradation verglichen werden, um die Sekundärbatterie, welche Gegenstand der Bestimmung ist, basierend auf einer Differenz zwischen dem Schwellenwert Dth und dem Schwellenwert Dth0 zu klassifizieren, wobei ΔDth = Dth - Dth0 ist,
wobei das gelernte Modell in Bezug auf eine Vielzahl von Sekundärbatterien zum Lernen erzeugt wird, indem Folgendes durchgeführt wird:
für jede aus der Vielzahl von Sekundärbatterien zum Lernen
Bestimmen von charakteristischen Parametern der Sekundärbatterie zum Lernen;
basierend auf einer vorbestimmten Modellgleichung und den charakteristischen Parametern der Sekundärbatterie zum Lernen Erhalten einer Entladekapazität, die auftritt, wenn ein Elektrolytdiffusionskoeffizient der Sekundärbatterie zum Lernen verändert wurde, und Erhalten einer Beziehung zwischen dem Elektrolytdiffusionskoeffizienten und der Entladekapazität der Sekundärbatterie zum Lernen;
basierend auf der Beziehung zwischen dem Elektrolytdiffusionskoeffizienten und der Entladekapazität der Sekundärbatterie zum Lernen Bestimmen eines Schwellenwerts für den Elektrolytdiffusionskoeffizienten der Sekundärbatterie zum Lernen; und
Ausführen von maschinellem Lernen, das Lehrerdaten verwendet, wobei die Lehrerdaten erhalten werden, indem als Eingangsdaten Daten verwendet werden, die einige der charakteristischen Parameter der Sekundärbatterien zum Lernen umfassen, und als Ausgangsdaten die Schwellenwerte, die für die Elektrolytdiffusionskoeffizienten der Sekundärbatterien zum Lernen bestimmt wurden, verwendet werden.

2. Verfahren zum Bestimmen der Wiederverwertbarkeit einer Elektrode einer Sekundärbatterie nach Anspruch 1, ferner umfassend:
Klassifizieren der Sekundärbatterie, welche Gegenstand der Bestimmung ist, basierend auf einem Verringerungsverhältnis einer Entladekapazität der Sekundärbatterie, welche Gegenstand der Bestimmung ist.

3. Verfahren zum Bestimmen der Wiederverwertbarkeit einer Elektrode einer Sekundärbatterie nach Anspruch 1, wobei:
die Eingangsdaten, die für das maschinelle Lernen verwendet werden, für jede aus den Sekundärbatterien zum Lernen die Entladekapazität und zumindest eines aus einem Ausmaß einer Spannungsverringerung über einen vorbestimmten Zeitraum hinweg ab dem Beginn eines Entladevorgangs und einem Ausmaß eines Spannungsanstiegs über einen vorbestimmten Zeitraum hinweg ab dem Beginn eines Ladevorgangs umfassen; und
die Eingangsdaten, die für den Schwellenwertschätzungsschritt verwendet werden, eine Entladekapazität der Sekundärbatterie, welche Gegenstand der Bestimmung ist, zu einem Bestimmungszeitpunkt und zumindest eines aus einem Ausmaß an Spannungsverringerung über einen vorbestimmten Zeitraum hinweg ab dem Beginn eines Entladevorgangs und einem Ausmaß eines Spannungsanstiegs über einen vorbestimmten Zeitraum hinweg ab dem Beginn eines Ladevorgangs umfassen.

4. Verfahren zum Bestimmen der Wiederverwertbarkeit einer Elektrode einer Sekundärbatterie nach Anspruch 3, wobei:
die Eingangsdaten, die für das maschinelle Lernen verwendet werden, ferner für jede aus den Sekundärbatterien zum Lernen eines oder mehrere ausgewählt aus der Gruppe bestehend aus einer Elektrodenfläche, einem durchschnittlichen Stromwert während des Gebrauchs, einem Positivelektrode-Anwendungsausmaß, einem Positivelektrode-Aktivmaterialtyp, einer Positivelektrode-Porosität, einem Negativelektrode-Aktivmaterialtyp, einer Negativelektrode-Porosität und einer Wärmekapazität umfasst; und
die Eingangsdaten, die für den Schwellenwertschätzungsschritt verwendet werden, ferner eines oder mehrere ausgewählt aus der Gruppe bestehend aus einer Elektrodenfläche, einem durchschnittlichen Stromwert während des Gebrauchs, einem Positivelektrode-Anwendungsausmaß, einem Positivelektrode-Aktivmaterialtyp, einer Positivelektrode-Porosität, einem Negativelektrode-Aktivmaterialtyp, einer Negativelektrode-Porosität und einer Wärmekapazität der Sekundärbatterie, welche Gegenstand der Bestimmung ist, umfasst.

5. Verfahren zum Bestimmen der Wiederverwertbarkeit einer Elektrode einer Sekundärbatterie nach einem der Ansprüche 1 bis 4, wobei das Bestimmen des Schwellenwerts des Elektrolytdiffusionskoeffizienten von jeder aus den Sekundärbatterien zum Lernen darin besteht, als den Schwellenwert den Elektrolytdiffusionskoeffizienten zu verwenden, der auftritt, wenn die Entladekapazität einem vorbestimmten zulässigen Wert oder weniger entspricht.

6. Verfahren zum Bestimmen der Wiederverwertbarkeit einer Elektrode einer Sekundärbatterie nach einem der Ansprüche 1 bis 4, wobei das Bestimmen des Schwellenwerts des Elektrolytdiffusionskoeffizienten von jeder aus den Sekundärbatterien zum Lernen darin besteht, als den Schwellenwert den Elektrolytdiffusionskoeffizienten als Einsetzen eines starken Rückgangs der Entladekapazität zu verwenden.

7. Verfahren zum Bestimmen der Wiederverwertbarkeit einer Elektrode einer Sekundärbatterie nach einem der Ansprüche 1 bis 4, wobei:
der Klassifizierungsschritt Folgendes umfasst:
wenn die Differenz ΔDth nicht größer als ein vorbestimmter Grenzwert ist, Klassifizieren der Sekundärbatterie, welche Gegenstand der Bestimmung ist, in eine erste Klassifizierung und, wenn die Differenz ΔDth größer als der vorbestimmte Grenzwert ist, Klassifizieren der Sekundärbatterie, welche Gegenstand der Bestimmung ist, in eine zweite Klassifizierung, und
wobei der vorbestimmte Grenzwert auf einen Grenzwert im Bereich von -0,05 x 10⁻⁶ bis 0,05 x 10⁻⁶/cm²/s eingestellt wird.

8. Verfahren zum Bestimmen der Wiederverwertbarkeit einer Elektrode einer Sekundärbatterie nach einem der Ansprüche 1 bis 4, wobei die Elektrode eine Positivelektrode ist.

9. Verfahren zum Bestimmen der Wiederverwertbarkeit einer Elektrode einer Sekundärbatterie nach einem der Ansprüche 1 bis 4, wobei die Sekundärbatterie, welche Gegenstand der Bestimmung ist, eine Lithiumionenbatterie ist.

10. Programm zum Bestimmen der Wiederverwertbarkeit einer Elektrode einer Sekundärbatterie durch Bestimmen eines Degradationsausmaßes einer Elektrode, die in einer Sekundärbatterie, welche Gegenstand der Bestimmung ist, enthalten ist, wobei das Programm konfiguriert ist, um zu bewirken, dass ein Computer Folgendes durchführt:
einen Schwellenwertschätzungsschritt, in dem ein Schwellenwert Dth eines Elektrolytdiffusionskoeffizienten der Sekundärbatterie, welche Gegenstand der Bestimmung ist, unter Verwendung eines gelernten Modells und basierend auf Eingangsdaten geschätzt wird, wobei die Eingangsdaten Daten sind, die einige aus charakteristischen Parametern der Sekundärbatterie, welche Gegenstand der Bestimmung ist, umfassen; und
einen Klassifizierungsschritt, in dem der Schwellenwert Dth und ein Schwellenwert Dth0 eines Elektrolytdiffusionskoeffizienten der Sekundärbatterie, welche Gegenstand der Bestimmung ist, oder einer Sekundärbatterie desselben Typs wie die Sekundärbatterie, welche Gegenstand der Bestimmung ist, vor der Degradation verglichen werden, um die Sekundärbatterie, welche Gegenstand der Bestimmung ist, basierend auf einer Differenz zwischen dem Schwellenwert Dth und dem Schwellenwert Dth0 zu klassifizieren, wobei ΔDth = Dth - Dth0 ist,
wobei das gelernte Modell in Bezug auf eine Vielzahl von Sekundärbatterien zum Lernen erzeugt wird, indem Folgendes durchgeführt wird:
für jede aus der Vielzahl von Sekundärbatterien zum Lernen
Bestimmen von charakteristischen Parametern der Sekundärbatterie zum Lernen;
basierend auf einer vorbestimmten Modellgleichung und den charakteristischen Parametern der Sekundärbatterie zum Lernen Erhalten einer Entladekapazität, die auftritt, wenn ein Elektrolytdiffusionskoeffizient der Sekundärbatterie zum Lernen verändert wurde, und Erhalten einer Beziehung zwischen dem Elektrolytdiffusionskoeffizienten und der Entladekapazität der Sekundärbatterie zum Lernen;
basierend auf der Beziehung zwischen dem Elektrolytdiffusionskoeffizienten und der Entladekapazität der Sekundärbatterie zum Lernen Bestimmen eines Schwellenwerts für den Elektrolytdiffusionskoeffizienten der Sekundärbatterie zum Lernen; und
Ausführen von maschinellem Lernen, das Lehrerdaten verwendet, wobei die Lehrerdaten erhalten werden, indem als Eingangsdaten Daten verwendet werden, die einige der charakteristischen Parameter der Sekundärbatterien zum Lernen umfassen, und als Ausgangsdaten die Schwellenwerte, die für die Elektrolytdiffusionskoeffizienten der Sekundärbatterien zum Lernen bestimmt wurden, verwendet werden.

11. Vorrichtung zum Bestimmen der Wiederverwertbarkeit einer Elektrode einer Sekundärbatterie durch Bestimmen eines Degradationsausmaßes einer Elektrode, die in einer Sekundärbatterie, welche Gegenstand der Bestimmung ist, enthalten ist, umfassend:
eine Schwellenwertschätzungsvorrichtung, mit der ein Schwellenwert Dth eines Elektrolytdiffusionskoeffizienten der Sekundärbatterie, welche Gegenstand der Bestimmung ist, unter Verwendung eines gelernten Modells und basierend auf Eingangsdaten geschätzt wird, wobei die Eingangsdaten Daten sind, die einige aus charakteristischen Parametern der Sekundärbatterie, welche Gegenstand der Bestimmung ist, umfassen; und
eine Klassifizierungsvorrichtung, mit der der Schwellenwert Dth und ein Schwellenwert Dth0 eines Elektrolytdiffusionskoeffizienten der Sekundärbatterie, welche Gegenstand der Bestimmung ist, oder einer Sekundärbatterie desselben Typs wie die Sekundärbatterie, welche Gegenstand der Bestimmung ist, vor der Degradation verglichen werden, um die Sekundärbatterie, welche Gegenstand der Bestimmung ist, basierend auf einer Differenz zwischen dem Schwellenwert Dth und dem Schwellenwert Dth0 zu klassifizieren, wobei ΔDth = Dth - Dth0 ist,
wobei das gelernte Modell in Bezug auf eine Vielzahl von Sekundärbatterien zum Lernen erzeugt wird, indem Folgendes durchgeführt wird:
für jede aus der Vielzahl von Sekundärbatterien zum Lernen
Bestimmen von charakteristischen Parametern der Sekundärbatterie zum Lernen;
basierend auf einer vorbestimmten Modellgleichung und den charakteristischen Parametern der Sekundärbatterie zum Lernen Erhalten einer Entladekapazität, die auftritt, wenn ein Elektrolytdiffusionskoeffizient der Sekundärbatterie zum Lernen verändert wurde, und Erhalten einer Beziehung zwischen dem Elektrolytdiffusionskoeffizienten und der Entladekapazität der Sekundärbatterie zum Lernen;
basierend auf der Beziehung zwischen dem Elektrolytdiffusionskoeffizienten und der Entladekapazität der Sekundärbatterie zum Lernen Bestimmen eines Schwellenwerts für den Elektrolytdiffusionskoeffizienten der Sekundärbatterie zum Lernen; und
Ausführen von maschinellem Lernen, das Lehrerdaten verwendet, wobei die Lehrerdaten erhalten werden, indem als Eingangsdaten Daten verwendet werden, die einige der charakteristischen Parameter der Sekundärbatterien zum Lernen umfassen, und als Ausgangsdaten die Schwellenwerte, die für die Elektrolytdiffusionskoeffizienten der Sekundärbatterien zum Lernen bestimmt wurden, verwendet werden.

## Revendications

1. Procédé de détermination de la recyclabilité d'une électrode de batterie secondaire en déterminant un degré de détérioration d'une électrode incluse dans une batterie secondaire soumise à une détermination, comprenant :
une étape d'estimation de valeur de seuil dans laquelle une valeur de seuil Dth d'un coefficient de diffusion d'électrolyte de la batterie secondaire soumise à une détermination est estimée en utilisant un modèle appris et sur la base de données d'entrée, les données d'entrée étant des données incluant certains de paramètres caractéristiques de la batterie secondaire soumise à une détermination ; et
une étape de classification dans laquelle la valeur de seuil Dth et une valeur de seuil Dth0 d'un coefficient de diffusion d'électrolyte de la batterie secondaire soumise à une détermination ou d'une batterie secondaire du même type que la batterie secondaire soumise à une détermination avant détérioration sont comparées pour classer la batterie secondaire soumise à une détermination sur la base d'une différence entre la valeur de seuil Dth et la valeur de seuil Dth0, ΔDth = Dth - Dth0,
dans lequel le modèle appris est généré par rapport à une pluralité de batteries secondaires pour un apprentissage en effectuant les étapes consistant à :
pour chacune de la pluralité de batteries secondaires pour un apprentissage,
déterminer des paramètres caractéristiques de la batterie secondaire pour un apprentissage ;
sur la base d'une équation de modèle prédéterminée et des paramètres caractéristiques de la batterie secondaire pour un apprentissage, obtenir une capacité de décharge trouvée lorsqu'un coefficient de diffusion d'électrolyte de la batterie secondaire pour un apprentissage a été modifié et obtenir une relation entre le coefficient de diffusion d'électrolyte et la capacité de décharge de la batterie secondaire pour un apprentissage ;
sur la base de la relation entre le coefficient de diffusion d'électrolyte et la capacité de décharge de la batterie secondaire pour un apprentissage, déterminer une valeur de seuil du coefficient de diffusion d'électrolyte de la batterie secondaire pour un apprentissage ; et
exécuter un apprentissage automatique utilisant des données d'enseignement, les données d'enseignement étant obtenues en utilisant, comme données d'entrée, des données incluant certains des paramètres caractéristiques des batteries secondaires pour un apprentissage et, comme données de sortie, les valeurs de seuil déterminées pour les coefficients de diffusion d'électrolyte des batteries secondaires pour un apprentissage.

2. Procédé de détermination de la recyclabilité d'une électrode de batterie secondaire selon la revendication 1, comprenant en outre l'étape consistant à :
classer la batterie secondaire soumise à une détermination sur la base d'une proportion de diminution d'une capacité de décharge de la batterie secondaire soumise à une détermination.

3. Procédé de détermination de la recyclabilité d'une électrode de batterie secondaire selon la revendication 1, dans lequel :
les données d'entrée utilisées pour un apprentissage automatique incluent, pour chacune des batteries secondaires pour un apprentissage, la capacité de décharge et au moins une parmi une quantité de diminution de tension pendant une période de temps prédéterminée depuis un début de décharge et une quantité d'augmentation de tension pendant une période de temps prédéterminée depuis un début de charge ; et
les données d'entrée utilisées pour l'étape d'estimation de valeur de seuil incluent une capacité de décharge de la batterie secondaire soumise à une détermination à un temps de détermination, et au moins une parmi une quantité de diminution de tension pendant une période de temps prédéterminée depuis un début de décharge et une quantité d'augmentation de tension pendant une période de temps prédéterminée à partir d'un début de charge.

4. Procédé de détermination de la recyclabilité d'une électrode de batterie secondaire selon la revendication 3, dans lequel :
les données d'entrée utilisées pour un apprentissage automatique incluent en outre, pour chacune des batteries secondaires pour un apprentissage, un ou plusieurs choisis dans le groupe constitué d'une aire d'électrode, d'une valeur de courant moyenne en utilisation, d'une quantité d'application d'électrode positive, d'un type de matériau actif d'électrode positive, d'une porosité d'électrode positive, d'un type de matériau actif d'électrode négative, d'une porosité d'électrode négative et d'une capacité thermique ; et
les données d'entrée utilisées pour l'étape d'estimation de valeur de seuil incluent en outre un ou plusieurs choisis dans le groupe constitué d'une zone d'électrode, d'une valeur de courant moyenne en utilisation, d'une quantité d'application d'électrode positive, d'un type de matériau actif d'électrode positive, d'une porosité d'électrode positive, d'un type de matériau actif d'électrode négative, d'une porosité d'électrode négative et d'une capacité thermique de la batterie secondaire soumise à une détermination.

5. Procédé de détermination de la recyclabilité d'une électrode de batterie secondaire selon l'une quelconque des revendications 1 à 4, dans lequel la détermination de la valeur de seuil du coefficient de diffusion d'électrolyte de chacune des batteries secondaires pour un apprentissage consiste à décider d'utiliser, en tant que valeur de seuil, le coefficient de diffusion d'électrolyte trouvé lorsque la capacité de décharge devient une valeur autorisée prédéterminée ou inférieure.

6. Procédé de détermination de la recyclabilité d'une électrode de batterie secondaire selon l'une quelconque des revendications 1 à 4, dans lequel la détermination de la valeur de seuil du coefficient de diffusion d'électrolyte de chacune des batteries secondaires pour un apprentissage consiste à décider d'utiliser, en tant que valeur de seuil, le coefficient de diffusion d'électrolyte au début d'une chute brutale de capacité de décharge.

7. Procédé de détermination de la recyclabilité d'une électrode de batterie secondaire selon l'une quelconque des revendications 1 à 4, dans lequel :
l'étape de classification inclut les étapes consistant à :
si la différence ΔDth n'est pas supérieure à une valeur limite prédéterminée, classer la batterie secondaire soumise à une détermination dans une première classification, et, si la différence ΔDth est supérieure à la valeur limite prédéterminée, classer la batterie secondaire soumise à une détermination dans une seconde classification, et
la valeur limite prédéterminée est réglée à une valeur dans une plage de -0,05 x 10⁻⁶ à 0,05 x 10⁻⁶cm²/sec.

8. Procédé de détermination de la recyclabilité d'une électrode de batterie secondaire selon l'une quelconque des revendications 1 à 4, dans lequel l'électrode est une électrode positive.

9. Procédé de détermination de la recyclabilité d'une électrode de batterie secondaire selon l'une quelconque des revendications 1 à 4, dans lequel la batterie secondaire soumise à une détermination est une batterie lithium-ion.

10. Programme pour déterminer la recyclabilité d'une électrode de batterie secondaire en déterminant un degré de détérioration d'une électrode incluse dans une batterie secondaire soumise à une détermination, le programme étant configuré pour amener un ordinateur à effectuer :
une étape d'estimation de valeur de seuil dans laquelle une valeur de seuil Dth d'un coefficient de diffusion d'électrolyte de la batterie secondaire soumise à une détermination est estimée en utilisant un modèle appris et sur la base de données d'entrée, les données d'entrée étant des données incluant certains de paramètres caractéristiques de la batterie secondaire soumise à une détermination ; et
une étape de classification dans laquelle la valeur de seuil Dth et une valeur de seuil Dth0 d'un coefficient de diffusion d'électrolyte de la batterie secondaire soumise à une détermination ou d'une batterie secondaire du même type que la batterie secondaire soumise à une détermination avant détérioration sont comparées pour classer la batterie secondaire soumise à une détermination sur la base d'une différence entre la valeur de seuil Dth et la valeur de seuil Dth0, ΔDth = Dth - Dth0,
dans lequel le modèle appris est généré par rapport à une pluralité de batteries secondaires pour un apprentissage en effectuant les étapes consistant à :
pour chacune de la pluralité de batteries secondaires pour un apprentissage,
déterminer des paramètres caractéristiques de la batterie secondaire pour un apprentissage ;
sur la base d'une équation de modèle prédéterminée et des paramètres caractéristiques de la batterie secondaire pour un apprentissage, obtenir une capacité de décharge trouvée lorsqu'un coefficient de diffusion d'électrolyte de la batterie secondaire pour un apprentissage a été modifié et obtenir une relation entre le coefficient de diffusion d'électrolyte et la capacité de décharge de la batterie secondaire pour un apprentissage ;
sur la base de la relation entre le coefficient de diffusion d'électrolyte et la capacité de décharge de la batterie secondaire pour un apprentissage, déterminer une valeur de seuil du coefficient de diffusion d'électrolyte de la batterie secondaire pour un apprentissage ; et
exécuter un apprentissage automatique utilisant des données d'enseignement, les données d'enseignement étant obtenues en utilisant, comme données d'entrée, des données incluant certains des paramètres caractéristiques des batteries secondaires pour un apprentissage et, comme données de sortie, les valeurs de seuil déterminées pour les coefficients de diffusion d'électrolyte des batteries secondaires pour un apprentissage.

11. Appareil pour déterminer la recyclabilité d'une électrode de batterie secondaire en déterminant un degré de détérioration d'une électrode incluse dans une batterie secondaire soumise à une détermination, comprenant :
un dispositif d'estimation de valeur de seuil avec lequel une valeur de seuil Dth du coefficient de diffusion d'électrolyte de la batterie secondaire soumise à une détermination est estimée en utilisant un modèle appris et sur la base de données d'entrée, les données d'entrée étant des données incluant certains des paramètres caractéristiques de la batterie secondaire soumise à une détermination ; et
un dispositif de classification avec lequel la valeur de seuil Dth et une valeur de seuil Dth0 de coefficient de diffusion d'électrolyte de la batterie secondaire soumise à une détermination ou d'une batterie secondaire du même type que la batterie secondaire soumise à une détermination avant détérioration sont comparées pour classer la batterie secondaire soumise à une détermination sur la base d'une différence entre la valeur de seuil Dth et la valeur de seuil Dth0, ΔDth = Dth - Dth0,
dans lequel le modèle appris est généré par rapport à une pluralité de batteries secondaires pour un apprentissage en effectuant les étapes consistant à :
pour chacune de la pluralité de batteries secondaires pour un apprentissage,
déterminer des paramètres caractéristiques de la batterie secondaire pour un apprentissage ;
sur la base d'une équation de modèle prédéterminée et des paramètres caractéristiques de la batterie secondaire pour un apprentissage, obtenir une capacité de décharge trouvée lorsqu'un coefficient de diffusion d'électrolyte de la batterie secondaire pour un apprentissage a été modifié et obtenir une relation entre le coefficient de diffusion d'électrolyte et la capacité de décharge de la batterie secondaire pour un apprentissage ;
sur la base de la relation entre le coefficient de diffusion d'électrolyte et la capacité de décharge de la batterie secondaire pour un apprentissage, déterminer une valeur de seuil du coefficient de diffusion d'électrolyte de la batterie secondaire pour un apprentissage ; et
exécuter un apprentissage automatique utilisant des données d'enseignement, les données d'enseignement étant obtenues en utilisant, comme données d'entrée, des données incluant certains des paramètres caractéristiques des batteries secondaires pour un apprentissage et, comme données de sortie, les valeurs de seuil déterminées pour les coefficients de diffusion d'électrolyte des batteries secondaires pour un apprentissage.
